(19) Europäisches Patentamt
European Patent Office
Office européen des brevets

(11) **EP 3 483 451 B1**

(12) **EUROPÄISCHE PATENTSCHRIFT**

(45) Veröffentlichungstag und Bekanntmachung des Hinweises auf die Patenterteilung:
**05.01.2022 Patentblatt 2022/01**

(51) Int Cl.:
*F04D 19/04* (2006.01)     *F04D 29/058* (2006.01)
*F16C 32/04* (2006.01)

(21) Anmeldenummer: **17200651.2**

(22) Anmeldetag: **08.11.2017**

(54) **POSITIONSERFASSUNGSVORRICHTUNG FÜR EINEN MAGNETGELAGERTEN ROTOR**

POSITION DETECTION APPARATUS FOR ROTOR WITH MAGNETIC BEARING

DISPOSITIF DE DÉTECTION DE POSITION POUR ROTOR AVEC PALIER MAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.05.2019 Patentblatt 2019/20**

(73) Patentinhaber: **PFEIFFER VACUUM GMBH**
**35614 Asslar (DE)**

(72) Erfinder: **Wang, Jinou**
**35606 Solms-Niederbiel (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**EP-A1- 3 064 791     US-A1- 2014 219 841**

**Beschreibung**

Die vorliegende Erfindung betrifft eine Vorrichtung und ein Verfahren zur Erfassung der Position eines zumindest teilweise magnetgelagerten Objekts, insbesondere eines zumindest teilweise magnetgelagerten Rotors, insbesondere eines zumindest teilweise magnetgelagerten Rotors einer Vakuumpumpe, bevorzugt einer Turbomolekularpumpe. Die Erfindung betrifft ferner eine Vakuumpumpe, insbesondere Turbomolekularpumpe, mit einer solchen Positionserfassungsvorrichtung.

Vakuumpumpen, wie zum Beispiel Turbomolekularpumpen, werden in unterschiedlichen Bereichen der Technik eingesetzt, um ein für einen jeweiligen Prozess notwendiges Vakuum zu schaffen. Turbomolekularpumpen umfassen einen Stator mit mehreren in Richtung einer Rotorachse aufeinanderfolgenden Statorscheiben und einen relativ zu dem Stator um die Rotorachse drehbar gelagerten Rotor, der eine Rotorwelle und mehrere auf der Rotorwelle angeordnete, in axialer Richtung aufeinanderfolgende und zwischen den Statorscheiben angeordnete Rotorscheiben umfasst, wobei die Statorscheiben und die Rotorscheiben jeweils eine pumpaktive Struktur aufweisen.

Mit der Verbreitung der digitalen Regelung bei der aktiven Magnetlagertechnologie ist derzeit eine synchronisierte Abtastung der Positionssignale in Bezug auf ein die Positionssensorik treibendes Erregungssignal allgemein üblich. Die Abtastperiode entspricht also bisher der Erregungsperiode des Erregungssignals oder einem ganzzahligen Mehrfachen dieser Erregungsperiode. Eine solche Synchronisierung ist vorgesehen, um einen falschen niederfrequenten Störsignalanteil im Positionssignal zu vermeiden.

Unter idealen Bedingungen besitzt das Sensorausgangssignal stets dieselbe Frequenz wie das die Positionssensorik treibende Erregungssignal. Zudem existiert auch eine Phasenverschiebung zwischen dem Erregungssignal und dem Sensorausgang der Positionssensorik, die durch das gesamte durch die Positionssensorik gebildete Übertragungsglied verursacht ist. Wird diese Phasenverschiebung als konstant angenommen, so kann die bisher übliche synchronisierte Abtastung so implementiert werden, dass zu einem jeweiligen Abtastzeitpunkt stets ein Scheitelwert des Sensorausgangs ermittelt wird. Die abgetastete Sensorausgangsspannung entspricht dann eindeutig der Position des Objekts auf der Messspur zwischen den beiden maximalen Ausschlägen.

In der Praxis variiert die zuvor genannte Phasenverschiebung jedoch. Umfasst die berührungslose Sensorik zur Erfassung einer Objektbewegung entlang einer jeweiligen Messachse jeweils eine Sensorspuleneinheit mit wenigstens zwei Sensorspulen, die mit einem periodischen elektrischen Erregungssignal beaufschlagt werden und relativ zueinander sowie relativ zum Magnetlager so angeordnet sind, dass bei einer jeweiligen Objektbewegung entlang der jeweiligen Messachse in den beiden Sensorspulen entweder eine gegensinnige Induktivitätsänderung auftritt oder sich die Induktivität nur in einer der beiden Sensorspulen ändert, so erhöht sich mit der Bewegung des Objekts entlang der Messspur von einem Ausschlag zum anderen die Induktivität der ersten Spule, während sich gleichzeitig auch deren Widerstand verringert. Die Änderung der Impedanz der zweiten Spule verhält sich gegensinnig. So wird die Impedanz dieser zweiten Spule reduziert, während deren Widerstand erhöht wird. Die Phasenverschiebung ist somit stets von der Position des Objektes abhängig. Dieser durch die positionsabhängige Phasenverschiebung auftretende Messfehler kann durch die bisher übliche synchronisierte Abtastung nicht eliminiert werden.

In der US 2014/0219841 A1 ist eine Vorrichtung zur Erfassung der Position eines zumindest teilweise magnetgelagerten Objektes mit einer berührungslosen Sensorik und einer dieser zugeordneten, bei einer Steuerfrequenz arbeitenden digitalen Steuer- und/oder Auswerteeinrichtung beschrieben. Dabei umfasst die Steuer- und/oder Auswerteeinrichtung Mittel zur Erzeugung eines periodischen elektrischen Erregungssignals ("carrier wave") mit einer Erregungsfrequenz $f_e$, die der Trägerfrequenz $f_c$ entspricht, sodass die Erregungsfrequenz $f_e$ durch die Beziehung $f_e = M \cdot f_c$ mit M = 1 definiert ist. Die berührungslose Sensorik ist zur Modulation des Erregungssignals in Abhängigkeit von der Position des Objektes ausgeführt und liefert als Ausgangssignal ein entsprechend moduliertes analoges Sensorsignal. Die Steuer- und/oder Auswerteeinrichtung umfasst mit der Steuerfrequenz arbeitende Rechenmittel zur Berechnung der Position des Objektes auf der Basis des von den Mitteln zur A/D-Wandlung gelieferten digitalen Sensorsignals.

Der Erfindung liegt die Aufgabe zugrunde, eine Vorrichtung und ein Verfahren der eingangs genannten Art anzugeben, die eine robustere, genauere und zuverlässigere, insbesondere auf dem Wirbelstrom-Effekt basierende berührungslose Erfassung der Position eines zumindest teilweise magnetgelagerten Objektes ermöglichen und insbesondere robuster gegenüber positionsbedingten Phasenverschiebungen zwischen dem Erregungssignal und dem Sensorausgang der Positionssensorik sind. Insbesondere soll dies in Verbindung mit einem schnell drehenden, zumindest teilweise magnetgelagerten Rotor, insbesondere einem zumindest teilweise magnetgelagerten Rotor einer Vakuumpumpe, ermöglicht werden

Die Aufgabe wird erfindungsgemäß durch eine Vorrichtung mit den Merkmalen des Anspruchs 1, durch ein Verfahren mit den Merkmalen des Anspruchs 14, sowie durch eine Vakuumpumpe, insbesondere Turbomolekularpumpe, mit den Merkmalen des Anspruchs 13 gelöst.

Bevorzugte Ausführungsformen der erfindungsgemäßen Vorrichtung ergeben sich aus den Unteransprüchen, der vorliegenden Beschreibung sowie der Zeichnung. Die erfindungsgemäße Vorrichtung zur Positionserfassung umfasst eine berührungslose Sensorik und eine dieser zugeordnete, bei einer Steuerfrequenz $f_c$ arbeitende digitale Steuer- und/oder Auswerteeinrichtung. Dabei umfasst die Steuer- und/oder Auswerteeinrichtung Mittel zur Erzeugung eines periodischen elektrischen Erregungssignals mit einer Erregungsfrequenz $f_e$, die durch die folgende Beziehung definiert ist:

$f_e = M \cdot f_c$, wobei M eine natürliche Zahl >1 ist.

Die berührungslose Sensorik ist zur Modulation des Erregungssignals in Abhängigkeit von der Position des Objekts ausgeführt und liefert als Ausgangssignal ein entsprechend moduliertes analoges Sensorsignal. Die Steuer- und/oder Auswerteeinrichtung umfasst Mittel zur A/D-Wandlung des analogen Sensorsignals in ein digitales Sensorsignal, durch die das modulierte analoge Sensorsignal mit einer bezüglich der Erregungsfrequenz $f_e$ asynchronen Abtastfrequenz $f_s$ abgetastet wird, für die die folgende Beziehung gilt:

$$f_s \neq f_e / N,$$

wobei N eine weitere, von M unabhängige natürliche Zahl ist.

Die Steuer- und/oder Auswerteeinrichtung umfasst mit der Steuerfrequenz $f_c$ arbeitende Rechenmittel zur Berechnung der Position des Objekts auf der Basis des von den Mitteln zur A/D-Wandlung gelieferten digitalen Sensorsignals.

Das modulierte analoge Sensorsignal wird durch die Mittel zur A/D-Wandlung mit einer asynchronen Abtastfrequenz $f_s$ abgetastet, die durch die folgende Beziehung definiert ist:

$$f_s = \frac{2M}{2M \pm 1} \cdot f_e,$$

wobei M wieder die natürliche Zahl >1 und $f_e$ wieder die Erregungsfrequenz des periodischen elektrischen Erregungssignals ist.

Aufgrund dieser Ausbildung wird eine robustere, genauere und zuverlässigere, insbesondere auf dem Wirbelstrom-Effekt basierende berührungslose Erfassung der Position eines zumindest teilweise magnetgelagerten Objekts erreicht, wobei die Vorrichtung insbesondere auch robuster gegenüber positionsbedingten Phasenverschiebungen zwischen dem Erregungssignal und dem Sensorausgang der Positionssensorik ist. Dabei wird durch die natürliche Zahl M die Stärke der asynchronen Überabtastung des Rückführungssignals des Regelungssystems bestimmt.

Indem die asynchrone Abtastfrequenz $f_s$ die zuvor genannte Beziehung erfüllt, stellen die M Abtastpunkte genau eine Halbwelle des das Ausgangssignal der berührungslosen Sensorik bildenden modulierten analogen Sensorsignals dar. Mit einer entsprechenden gezielten asynchronen Abtastfrequenz $f_s$ kann somit periodisch eine ganze Halbwelle des modulierten analogen Sensorsignals erhalten werden. Durch eine mathematische Berechnung aller Messpunkte der Halbwelle kann dann die Fläche dieser Halbwelle berechnet werden, die proportional zur Position des Objektes ist. Durch die Nutzung der Fläche anstelle der einzelnen Punkte der Amplitude erhöht sich die Robustheit der Positionsmessung gegen kleinere Phasenverschiebungen des modulierten analogen Sensorsignals bezüglich des Erregungssignals der Sensorik.

Die Rechenmittel zur Berechnung der Position des Objekts auf der Basis der M Abtastwerte des modulierten analogen Sensorsignals der berührungslosen Sensorik sind vorteilhafterweise entsprechend der folgenden Beziehung ausgeführt:

$$x = \sum_{n=0}^{M-1} k[n] \cdot U_{sen}[n],$$

wobei M wieder die natürliche Zahl >1 ist und k[n] die Koeffizienten für die Berechnung sind.

Sind alle Koeffizienten k gleich, so bildet das Ergebnis dieser Berechnung die Fläche des modulierten analogen Sensorsignals im betrachteten Zeitfenster ab. Die erhaltene Fläche ist auch proportional zur Position des Objekts und wesentlich robuster gegen kleinere Phasenverschiebungen des Signals.

Eine weitere vorteilhafte beispielhafte Ausführungsform der erfindungsgemäßen Vorrichtung zeichnet sich dadurch aus, dass die Mittel zur A/D-Wandlung eine erste und eine davon verschiedene zweite Abtasteinheit umfassen, durch die das modulierte analoge Sensorsignal jeweils mit einer Abtastfrequenz $f_s$ abgetastet wird, die durch die folgende Beziehung definiert ist:

$$f_s = \frac{2M}{2M \pm 1} \cdot f_e,$$

wobei M wieder die natürliche Zahl >1 und $f_e$ die Erregungsfrequenz des periodischen elektrischen Erregungssignals ist,

wobei zwischen dem ersten Auftreten des ersten Abtastwertes der ersten Abtasteinheit und dem ersten Auftreten des ersten Abtastwerts der zweiten Abtasteinheit ein Zeitversatz $\Delta T$ besteht, der folgende Voraussetzung erfüllt:

$$0 < \Delta T < T_e,$$

wobei Te die Periode des periodischen elektrischen Erregungssignals $U_e$ ist.

Dabei sind die Rechenmittel zur Berechnung der Position des Objektes auf der Basis der 2M Abtastwerte der zur Abtastung des modulierten analogen Sensorsignals der berührungslosen Sensorik vorgesehenen Mittel zur A/D-Wandlung bevorzugt entsprechend der folgenden Beziehung ausgeführt:

$$x = \sum_{n=0}^{M-1} k_A[n] \cdot U_{senA}[n] + \sum_{n=0}^{M-1} k_B[n] \cdot U_{sen_B}[n],$$

wobei M wieder die natürliche Zahl >1 ist und $k_A[n]$ und $k_B[n]$ die Koeffizienten der Berechnung sind.

Die Anzahl der Abtasteinheiten ist allerdings nicht auf lediglich zwei Abtasteinheiten beschränkt. Grundsätzlich können beliebig viele Abtasteinheiten vorgesehen sein, beispielsweise 2, 3, 4, 5 oder 6 Abtasteinheiten.

Allgemein kann also vorgesehen sein, dass die Mittel zur A/D-Wandlung eine Anzahl $\xi$, wobei $\xi \geq 2$, verschiedener Abtasteinheiten umfassen, durch die das modulierte analoge Sensorsignal $U_{sen}$ jeweils mit einer Abtastfrequenz $f_s$ abgetastet wird, die durch die folgende Beziehung definiert ist:

$$f_s = \frac{2M}{2M \pm 1} \cdot f_e,$$

wobei M die natürliche Zahl >1 und $f_e$ die Erregungsfrequenz des periodischen elektrischen Erregungssignals $U_e$ ist, wobei zwischen dem ersten Auftreten des ersten Abtastwertes einer Abtasteinheit und dem ersten Auftreten des ersten Abtastwertes der unmittelbar folgenden Abtasteinheit ein Zeitversatz $\Delta T$ besteht, der folgende Vorrausetzung erfüllt: $0 < \Delta T < T_e$, wobei $T_e$ die Periode des periodischen elektrischen Erregungssignals $U_e$ ist.

Die Rechenmittel zur Berechnung der Position x des Objektes auf der Basis von $\xi \cdot M$ Abtastwerten, wobei $\xi \geq 2$, der zur Abtastung des modulierten analogen Sensorsignals $U_{sen}$ der berührungslosen Sensorik vorgesehenen Mittel zur A/D-Wandlung können entsprechend der folgenden Beziehung ausgeführt sein:

$$x = \sum_{n=0}^{M-1} k_1[n] \cdot U_{sen\_1}[n] + \sum_{n=0}^{M-1} k_2[n] \cdot U_{sen\_2}[n] + \cdots + \sum_{n=0}^{M-1} k_\xi[n] \cdot U_{sen\_\xi}[n],$$

wobei M wieder die natürliche Zahl >1 ist und $k_1[n]$ bis $k_\xi[n]$ die Koeffizienten der Berechnung sind.

Gemäß einer bevorzugten praktischen Ausführungsform der erfindungsgemäßen Vorrichtung umfasst die berührungslose Sensorik zur Erfassung einer Objektbewegung entlang einer jeweiligen Messachse jeweils eine Sensorspuleneinheit mit wenigstens zwei Sensorspulen, die über die Steuer- und/oder Auswerteeinrichtung jeweils mit dem periodischen elektrischen Erregungssignal beaufschlagbar und relativ zueinander sowie relativ zum Magnetlager des magnetgelagerten Objektes so angeordnet sind, dass bei einer jeweiligen Objektbewegung entlang der jeweiligen Messachse in den beiden Sensorspulen entweder eine gegensinnige Induktivitätsänderung auftritt oder sich die Induktivität nur in einer der beiden Sensorspulen ändert und in der anderen Sensorspule zumindest im Wesentlichen unverändert bleibt.

Als Sensorspulen können insbesondere Luftspulen vorgesehen sein. Die berührungslose Sensorik kann insbesondere zur Erfassung einer radialen und/oder einer axialen Rotorbewegung vorgesehen sein. Dabei kann die berührungslose Sensorik zur Erfassung der radialen Position des zumindest teilweise magnetgelagerten Rotors insbesondere für die Messung einer Verlagerung des Rotors entlang mehrerer Messachsen wie beispielsweise entlang zweier zueinander senkrechter, in einer zur Rotorachse senkrechten Ebene liegender X- und Y-Achsen auch mehrere jeweils einer solchen Messachse zugeordnete Sensorspuleneinheiten mit jeweils wenigstens zwei Sensorspulen umfassen.

Zur Erfassung der axialen Position des Rotors kann die Sensorik insbesondere eine Sensorspuleneinheit mit wenigstens zwei Sensorspulen umfassen, die zur Messung einer Verlagerung des Rotors entlang einer zur Rotorachse parallelen z-Achse vorgesehen sind.

Durch das periodische elektrische Erregungssignal, bei dem es sich beispielsweise um eine periodische Erregungsspannung handeln kann, wird in einer jeweiligen dem Magnetfeld des benachbarten Magnetlagers des magnetgelagerten Objektes ausgesetzten Sensorspule ein Strom induziert, dessen Betrag von der Induktivität der Sensorspule abhängig ist. Indem zudem die Induktivität zumindest einer Sensorspule einer jeweiligen Sensorspuleneinheit vom in Richtung der jeweiligen Messachse gemessenen Abstand der Sensorspule zum Magnetlager abhängig ist, ist über den in der Spule induzierten Strom eine jeweilige Verlagerung des Rotors entlang der betreffenden Messachse messbar.

Dabei ist eine jeweilige Sensorspule bevorzugt stationär angeordnet.

Während bei einer differenziellen Anordnung der beiden Sensorspulen bei einer jeweiligen Rotorbewegung in den beiden Sensorspulen eine gegensinnige Induktivitätsänderung auftritt, dient bei einer absoluten Spulenanordnung, bei der sich die Induktivität nur in einer der beiden Sensorspulen ändert, nur eine Sensorspule als Messspule, während die andere Sensorspule, in der die Induktivität unverändert bleibt, als Referenzspule dient.

Bei einer differenziellen Spulenanordnung hängt die Induktivität beider Sensorspulen jeweils vom in Richtung der jeweiligen Messachse gemessenen Abstand zwischen einer jeweiligen Sensorspule und dem benachbarten Magnetlager des magnetgelagerten Objektes ab. Dagegen ist bei der absoluten Sensoranordnung nur die Induktivität der als Messspule verwendeten Sensorspule vom in Richtung der jeweiligen Messachse gemessenen Abstand zwischen der Messspule und dem Magnetlager abhängig.

Bevorzugt sind Mittel zur Bildung einer das modulierte analoge Sensorsignal bildenden induzierten Sensorspannung aus einem Differenzstrom vorgesehen, der sich aus den in den beiden einer jeweiligen Messachse zugeordneten Sensorspulen induzierten Strömen ergibt, wobei die das modulierte analoge Sensorsignal bildende induzierte Sensorspannung über die Steuer- und/oder Auswerteeinrichtung zur Erfassung einer jeweiligen Objektbewegung entlang der betreffenden Sensorachse mit der bezüglich der Erregungsfrequenz asynchronen Abtastfrequenz abtastbar ist.

Das periodische elektrische Erregungssignal kann beispielsweise durch ein zumindest im Wesentlichen sinus- oder cosinusförmiges Signal gebildet sein. Grundsätzlich kann das periodische elektrische Erregungssignal jedoch auch eine von einer Sinus- oder Cosinusform abweichende Form besitzen. Es ist insbesondere lediglich sicherzustellen, dass es nicht nur periodisch ist, sondern sich innerhalb einer jeweiligen Periode auch hinreichend variabel verändert, damit in der dem Magnetfeld des benachbarten Magnetlagers des magnetgelagerten Objektes ausgesetzten Sensorspule ein zuverlässig messbarer Strom induziert wird.

Von Vorteil ist insbesondere, wenn die Mittel zur Bildung der das modulierte analoge Sensorsignal bildenden induzierten Sensorspannung einen eingangsseitig mit den beiden Sensorspulen verbundenen und ausgangsseitig eine Ausgangsspule aufweisenden Transformator umfassen.

Ein solcher Transformator dient nicht nur der Bildung der induzierten Sensorspannung aus den in den beiden Sensorspulen induzierten Strömen, er kann auch zur elektrischen Verstärkung der Sensorsignale genutzt werden.

Gemäß einer weiteren zweckmäßigen Ausführungsform der erfindungsgemäßen Vorrichtung ist zwischen dem Transformator und den beiden einer jeweiligen Messachse zugeordneten Sensorspulen ein über die Steuer- und/oder Auswerteeinrichtung ansteuerbarer, insbesondere analoger Schalter vorgesehen, über den der Transformator während des Erfassungsbetriebs zur Bestimmung des jeweils aktuellen Verstärkungsfaktors des Transformators wiederholt von den beiden Sensorspulen auf eine, insbesondere zwei feste Widerstände umfassende, Widerstandsanordnung, bevorzugt mit konstanter Impedanz, umschaltbar ist.

Dabei ist über die Steuer- und/oder Auswerteeinrichtung bevorzugt anhand eines Vergleichs des bestimmten jeweiligen aktuellen Verstärkungsfaktors des Transformators mit einem insbesondere gespeicherten Referenzwert die jeweils aktuelle Variation des Verstärkungsfaktors des Transformators feststellbar.

Bevorzugt ist über die Steuer- und/oder Auswerteeinrichtung anhand der festgestellten, jeweils aktuellen Variation des Verstärkungsfaktors des Transformators die während des Erfassungsbetriebs als Ausgangsspannung erzeugte, das modulierte analoge Sensorsignal bildende induzierte Sensorspannung korrigierbar, um, insbesondere durch die Temperatur des Transformators bedingte, Einflüsse auf die das modulierte analoge Sensorsignal bildende induzierte Sensorspannung zu kompensieren. Gleichzeitig können dadurch beispielsweise auch Toleranzen des Systems ausgeglichen werden.

Als feste Widerstände der Widerstandsanordnung können insbesondere Präzisionswiderstände vorgesehen sein.

Die berührungslose Sensorik, insbesondere eine jeweilige Sensorspuleneinheit, und/oder die Steuer- und/oder Auswerteeinrichtung sind zweckmäßigerweise auf einer Leiterplatte vorgesehen. Sie können dadurch zum Beispiel als vormontierte Einheit bereitgestellt werden.

Zur berührungslosen Erfassung der Position des zumindest teilweise magnetgelagerten Objekts bzw. Rotors entlang mehrerer Messachsen kann die berührungslose Sensorik eine entsprechende Mehrzahl von Sensorspuleneinheiten mit jeweils zumindest zwei Sensorspulen umfassen.

Vorteilhafterweise umfasst eine jeweilige Sensorspuleneinheit zur Bildung einer differenziellen Spulenanordnung, bei der in den beiden Sensorspulen bei einer jeweiligen radialen Objektbewegung eine gegensinnige Induktivitätsänderung auftritt, zwei auf einander gegenüberliegenden Seiten des benachbarten Magnetlagers des magnetgelagerten Objektes angeordnete Sensorspulen. Dagegen kann eine jeweilige Sensorspuleneinheit zur Bildung einer absoluten Spulenanordnung, bei der sich bei einer jeweiligen axialen Objektbewegung die Induktivität nur in einer der beiden Sensorspulen ändert und in der als Referenz dienenden anderen Sensorspule unverändert bleibt, mit relativ zueinander konzentrischen Sensorspulen unterschiedlicher Durchmesser ausgeführt sein.

Es ist beispielsweise auch eine erweiterte absolute Spulenanordnung zur Erfassung der Rotorbewegung entlang mehrerer Messachsen denkbar, bei der die den verschiedenen Messachsen zugeordneten Spuleneinheiten jeweils eine als Messspule dienende Sensorspule aufweisen und für die verschiedenen Spuleneinheiten eine gemeinsame Referenzspule vorgesehen ist.

Die Sensorspulen können insbesondere als Kunststoff-Luftspulen ausgeführt sein.

Mit der erfindungsgemäßen Vorrichtung kann insbesondere die Rotorposition einer schnell drehenden, zumindest teilweise magnetgelagerten Vakuumpumpe auf genaue, schnelle und zuverlässige Weise berührungslos erfasst werden, wobei durch die zum Erregungssignal asynchrone Abtastung des Sensorausgangssignals die Robustheit der Messung gegenüber kleineren Phasenverschiebungen des Sensorausgangssignals gegenüber dem Erregungssignal des Sensorik entsprechend erhöht wird.

Zur Messung beispielsweise einer Rotorposition entlang einer jeweiligen Messachse können beispielsweise zwei Luftspulen vorgesehen sein, die entweder als differenzielle Anordnung oder als absolute Anordnung vorgesehen sein können. Bei der differenziellen Anordnung liegen die beiden Sensorspulen einander gegenüber. Sie können insbesondere stationär vorgesehen und zur Messung radialer Abweichungen des Rotors insbesondere parallel zum benachbarten Magnetlager des magnetgelagerten Objektes bzw. parallel zur Rotorachse ausgerichtet sein. Eine jeweilige Rotorbewegung verursacht gleichzeitig eine Induktivitätserhöhung in der einen Sensorspule und eine Induktivitätsverringerung in der anderen Sensorspule. Bei einer jeweiligen absoluten Spulenanordnung dient eine Spule, deren Induktivität unverändert bleibt, lediglich als Referenzspule. Die Induktivität der anderen, als Messspule dienenden Sensorspule ist vom in Richtung der jeweiligen Messachse gemessenen Abstand zwischen der Sensorspule und dem benachbarten Magnetlager bzw. dem Rotor abhängig. Auch bei einer solchen absoluten Spulenanordnung können die Sensorspulen insbesondere wieder stationär vorgesehen sein. Zur Messung axialer Bewegungen des Rotors mit einer absoluten Spulenanordnung können die beiden Sensorspulen einer jeweiligen Sensorspuleneinheit beispielsweise einen unterschiedlichen Durchmesser aufweisen und insbesondere koaxial zum benachbarten Magnetlager bzw. koaxial zur Rotorachse ausgerichtet sein.

Bei beiden Varianten ergibt sich aus den in den beiden Sensorspulen einer jeweiligen Sensorspuleneinheit induzierten Strömen ein Differenzstrom, der über einen Transformator in eine induzierte Sensorspannung umgewandelt werden kann, die erfindungsgemäß bezüglich der Erregungsfrequenz asynchron abgetastet wird.

Um Toleranzen und Temperaturdrifts des Systems auszugleichen, kann über einen insbesondere analogen Schalter wiederholt ein separater Zweig aus Präzisionswiderständen anstelle der Sensorspulen auf die Verstärkerschaltung bzw. den Transformator geschaltet werden, um kurzzeitig einen Verstärker-Korrekturwert zu ermitteln. Die Messwertauswertung kann zyklisch erfolgen, wobei durch den oszillierenden Analogschalter abwechselnd ein Messwert zur Korrektur und ein realer Positionswert des Rotors ermittelt werden kann. Durch eine entsprechende Wahl der Messabfolge und der Sensor-Erregungsspannung wird ein optimales und schnelles Zusammenspiel von Korrektur- und Messwerterfassung ermöglicht. dabei kann das Erregungssignal in einem Messzyklus sowohl in der Phase als auch in der Amplitude mehrfach systematisch variiert werden, um eine höchstmögliche Messsicherheit zu erlangen.

Zur Erfassung der radialen Bewegung des Rotors können beispielsweise zwei differenzielle Sensorspuleneinheiten vorgesehen sein, über die eine jeweilige Rotorbewegung entlang zweier zueinander senkrechter Messachsen in einer zur Rotorachse senkrechten Ebene gemessen werden können. Bei den differenziellen Sensorspuleneinheiten ist die Induktivität der Sensorspulen jeweils von der Rotorposition entlang der Messachse abhängig. Zur Erfassung der axialen Bewegung des Rotors kann beispielsweise eine absolute Sensorspuleneinheit vorgesehen sein, über die eine jeweilige Rotorbewegung entlang einer zur Rotorachse parallelen Achse gemessen werden kann. In diesem Fall ist lediglich die Induktivität der Messspule von der Rotorposition entlang der Messachse abhängig, während die Induktivität der Messspule unabhängig von der Position des Rotors gleichbleibt. Dabei kann beispielsweise eine Sensorspuleneinheit vorgesehen sein, deren Sensorspulen als konzentrische Leiterplattenspulen ausgeführt sind. In beiden Fällen können die Sensorspulen insbesondere als Luftspulen, beispielsweise als Kunststoff-Luftspulen, ausgeführt sein.

Im Gegensatz zu einer herkömmlichen elektrischen Verstärkung des Rohmesssignals kann erfindungsgemäß über einen Transformator eine elektromagnetische Verstärkung erfolgen, wodurch nicht nur eine hohe Verstärkung sondern auch ein sehr niedriges Rauschniveau erzielt wird. Eine Beeinflussung des Verstärkungsfaktors durch die Temperatur des magnetischen Kerns des Transformators kann über die mittels des insbesondere analogen Schalters zuschaltbare Widerstandsanordnung kompensiert werden. Dazu kann der Schalter anhand eines Steuersignals der Steuer- und/oder Auswerteeinrichtung während des Messbetriebs zwischen den einer jeweiligen Messachse zugeordneten beiden Spulen variierender Impedanz und der beispielsweise zwei feste Widerstände umfassenden Widerstandsanordnung konstanter Impedanz umgeschaltet werden.

Beim Einschalten des Messsystems kann die Ausgangsspannung bei konstanter Impedanz als Referenz gespeichert werden. Während des Messbetriebs kann regelmäßig auf die konstante Impedanz umgeschaltet werden. Aus der aktuellen Ausgangsspannung bei konstanter Impedanz und der gespeicherten Referenz kann die aktuelle Variation des Verstärkungsfaktors festgestellt werden. Dadurch kann die Ausgangsspannung aus dem Sensorbetrieb so korrigiert werden, dass das Messergebnis unabhängig von der Temperatur des Transformators ist.

Die erfindungsgemäße Vakuumpumpe, insbesondere Turbomolekularpumpe, umfasst einen Stator, einen relativ zum Stator um die Rotorachse drehbar gelagerten Rotor sowie eine erfindungsgemäße Rotorpositionserfassungsvorrichtung. Die Lagerung des Rotors kann entweder an einem Bereich oder an mehreren Bereichen durch ein Magnetlager erfolgen. Insbesondere kann eine sogenannte Hybridlagerung erfolgen, bei der eine Lagerstelle von einem Magnetlager und eine weitere Lagerstelle von einem Wälzlager gebildet wird. Es kann aber auch eine reine Magnetlagerung des Rotors erfolgen.

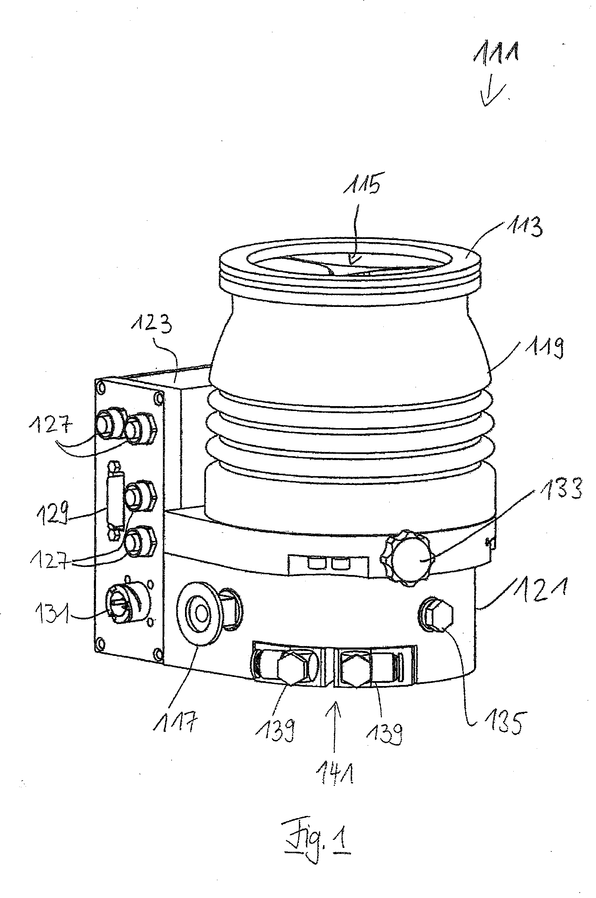

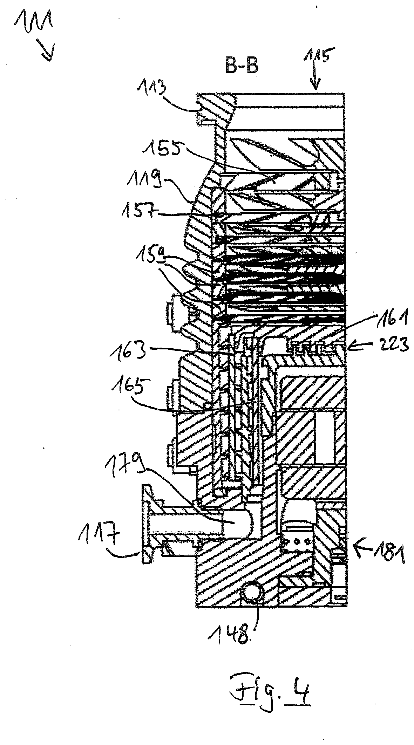

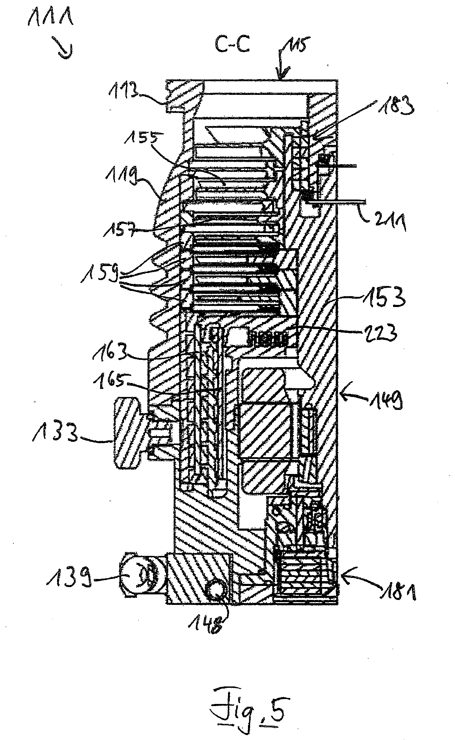

Insbesondere kann der Rotor so gelagert sein, wie es an anderer Stelle für die Turbomolekularpumpe gemäß den Fig. 1 bis 5 beschrieben ist. Das erfindungsgemäße Verfahren zur Erfassung der Position eines zumindest teilweise magnetgelagerten Objekts, insbesondere eines zumindest teilweise magnetgelagerten Rotors, insbesondere eines zumindest teilweise magnetgelagerten Rotors einer Vakuumpumpe, bevorzugt einer Turbomolekularpumpe, zeichnet sich dadurch aus, dass mittels einer bei einer Steuerfrequenz $f_c$ arbeitenden digitalen Steuer- und/oder Auswerteeinrichtung ein periodisches elektrisches Erregungssignal mit einer Erregungsfrequenz $f_e$ erzeugt wird, die durch die folgende Beziehung definiert ist:

$$f_e = M \cdot f_c,$$

wobei M eine natürliche Zahl >1 ist,
dass mittels einer berührungslosen Sensorik das Erregungssignal in Abhängigkeit von der Position des Objekts moduliert und als Ausgangssignal ein entsprechend moduliertes analoges Sensorsignal erzeugt wird, dass mittels der Steuer- und/oder Auswerteeinrichtung eine A/D-Wandlung des analogen Sensorsignals in ein digitales Sensorsignal durchgeführt wird, mit der das modulierte analoge Sensorsignal mit einer bezüglich der Erregungsfrequenz $f_e$ asynchronen Abtastfrequenz $f_s$ abgetastet wird, für die die folgende Beziehung gilt:

$$f_s \neq f_e / N,$$

wobei N eine weitere, von M unabhängige natürliche Zahl ist,

dass mittels der Steuer- und/oder Auswerteeinrichtung mit der Steuerfrequenz $f_c$ die Position des Objektes auf der Basis des durch die A/D-Wandlung erzeugten digitalen Sensorsignals berechnet wird und

das modulierte analoge Sensorsignal ($U_{sen}$) durch die A/D-Wandlung mit einer asynchronen Abtastfrequenz $f_s$ abgetastet wird, die durch die folgende Beziehung definiert ist:

$$f_s = \frac{2M}{2M \pm 1} \cdot f_e,$$

wobei M wieder die natürliche Zahl >1 und $f_e$ die Erregungsfrequenz des periodischen elektrischen Erregungssignals ist.

Die Erfindung wird im Folgenden anhand von Ausführungsbeispielen unter Bezugnahme auf die Zeichnung näher erläutert; in dieser zeigen:

Fig. 1      eine perspektivische Ansicht einer Turbomolekularpumpe,

Fig. 2      eine Ansicht der Unterseite der Turbomolekularpumpe von Fig. 1,

Fig. 3      einen Querschnitt der Turbomolekularpumpe längs der in Fig. 2 gezeigten Schnittlinie A-A,

Fig. 4      eine Querschnittsansicht der Turbomolekularpumpe längs der in Fig. 2 gezeigten Schnittlinie B-B,

Fig. 5      eine Querschnittsansicht der Turbomolekularpumpe längs der in Fig. 2 gezeigten Schnittlinie C-C,

Fig. 6      eine schematische Darstellung einer eine differenzielle Spulenanordnung aufweisenden beispielhaften Sensorspuleneinheit einer erfindungsgemäßen Positionserfassungsvorrichtung,

Fig. 7     eine schematische Darstellung einer herkömmlichen synchronisierten Abtastung des Ausgangssignals der Sensorspuleneinheit gemäß Fig. 6 unter idealen Bedingungen,

Fig. 8     eine schematische Darstellung einer herkömmlichen synchronisierten Abtastung des Ausgangssignals der Sensorspuleneinheit gemäß Fig. 6 unter realen Bedingungen,

Fig. 9     eine schematische Darstellung einer beispielhaften erfindungsgemäßen, gezielt asynchronen Abtastung des Ausgangssignals der Sensorspuleneinheit gemäß Fig. 6,

Fig. 10     eine schematische Darstellung aller M Abtastpunkte eines beispielhaften erfindungsgemäßen Regelzyklus mit einer beispielhaften erfindungsgemäßen Berechnung der Position anhand der Abtastpunkte,

Fig. 11     eine schematische Darstellung einer beispielhaften Ausführungsform einer erfindungsgemäßen Positionserfassungsvorrichtung mit zwei jeweils eine differenzielle Spulenanordnung aufweisenden Sensorspuleneinheiten zur berührungslosen Erfassung der radialen Rotorbewegung,

Fig. 12     eine schematische Darstellung einer eine absolute Spulenanordnung aufweisenden beispielhaften Sensorspuleneinheit einer erfindungsgemäßen Positionserfassungsvorrichtung,

Fig. 13     eine schematische Darstellung einer beispielhaften Ausführungsform einer erfindungsgemäßen Positionserfassungsvorrichtung mit einer eine absolute Spulenanordnung aufweisenden Sensorspuleneinheit zur berührungslosen Erfassung der axialen Rotorbewegung, wobei die Sensorspulen als konzentrische Leiterplattenspulen ausgeführt sind,

Fig. 14     eine schematische Darstellung einer beispielhaften erweiterten absoluten Spulenanordnung zur Erfassung der Rotorbewegung entlang mehrerer Messachsen, wobei die den verschiedenen Messachsen zugeordneten Spuleneinheiten jeweils eine als Messspule dienende Sensorspule aufweisen und für die verschiedenen Spuleneinheiten eine gemeinsame Referenzspule vorgesehen ist, und

Fig. 15     eine schematische Darstellung einer beispielhaften Temperaturkompensations-Schaltung einer erfindungsgemäßen Positionserfassungsvorrichtung.

Die in Fig. 1 gezeigte Turbomolekularpumpe 111, bei der die Erfindung vorgesehen sein kann, umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, so dass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

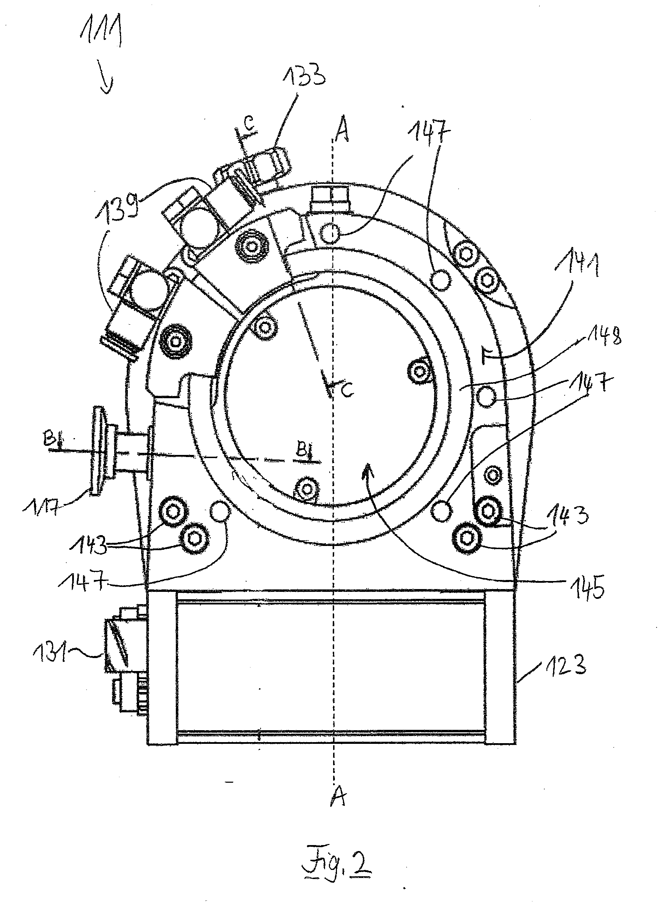

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

In den Figuren 2 bis 5 ist eine Kühlmittelleitung 148 dargestellt, in welcher das über die Kühlmittelanschlüsse 139 ein- und ausgeleitete Kühlmittel zirkulieren kann.

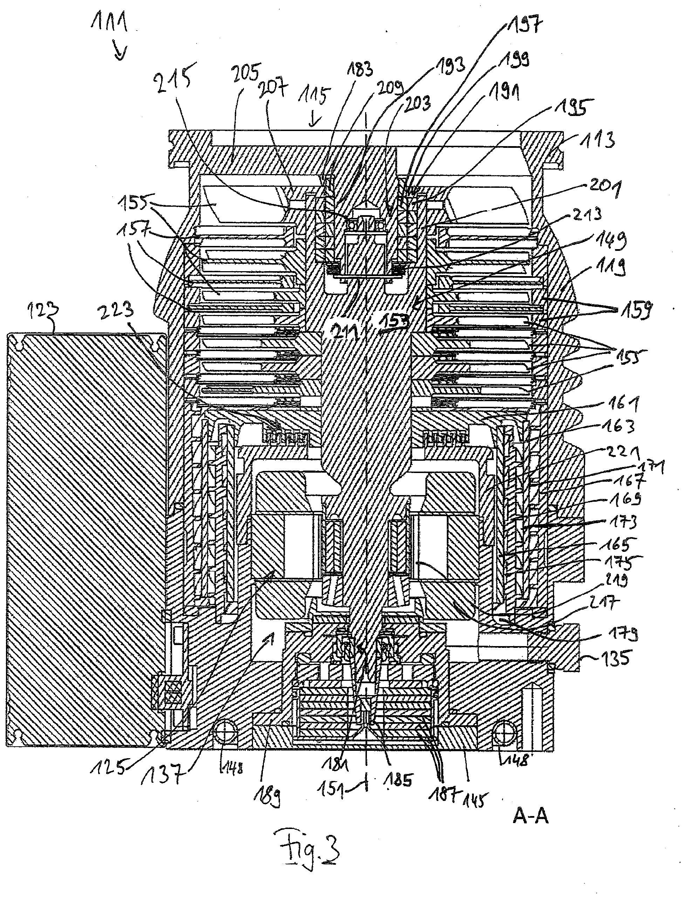

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 92 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug gemessen, so dass das Fanglager 215 im normalen Betrieb der Vakuumpumpe nicht in Eingriff gelangt, und gleichzeitig klein genug, so dass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sogenannte und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

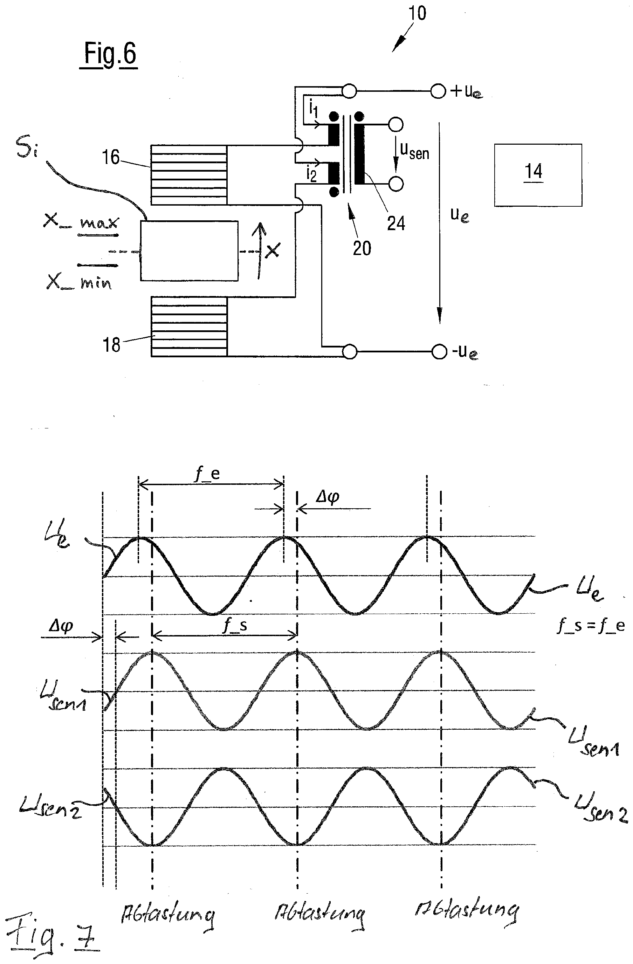

Die Fig. 6 und 12 bis 14 zeigen unterschiedliche beispielhafte Ausführungsformen einer erfindungsgemäßen Vorrichtung 10 zur Erfassung der Position x eines zumindest teilweise magnetgelagerten Objekts, insbesondere eines zumindest teilweise magnetgelagerten Rotors 22, insbesondere eines zumindest teilweise magnetgelagerten Rotors einer Vakuumpumpe. Dabei kann eine solche Positionserfassungsvorrichtung 10 beispielsweise zur Erfassung der Position eines Rotors einer Vakuumpumpe eingesetzt werden, wie sie im Zusammenhang mit den Fig. 1 bis 5 beschrieben wurde.

Eine Positionserfassungsvorrichtung 10 umfasst eine im Bereich eines Magnetlagers eines Rotors, beispielsweise im Bereich des Permanentmagnetlagers 183 der Vakuumpumpe gemäß den Fig. 1 bis 5, angeordnete berührungslose Sensorik 12 und eine dieser zugeordnete, bei einer Steuerfrequenz $f_c$ arbeitende digitale Steuer- und/oder Auswerteeinrichtung 14. Bei einem Einsatz der Positionserfassungsvorrichtung 10 in einer in den Fig. 1 bis 5 dargestellten Vakuumpumpe kann die Steuer- und/oder Auswerteeinrichtung 14 der Positionserfassungsvorrichtung 10 in die Steuereinheit der Vakuumpumpe integriert oder auch getrennt von dieser vorgesehen sein.

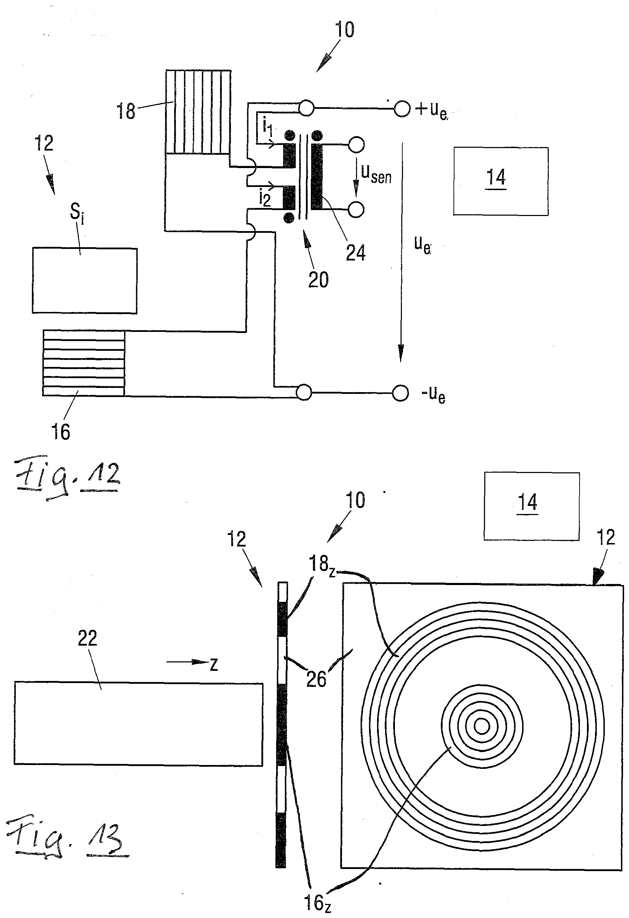

Die berührungslose Sensorik 12 umfasst zur Erfassung der Objekt- bzw. Rotorbewegung entlang einer jeweiligen Messachse $S_i$ jeweils eine Sensorspuleneinheit mit wenigstens zwei Sensorspulen 16, 18, die über die Steuer- und/oder Auswerteeinrichtung 14 jeweils mit einem periodischen elektrischen Erregungssignal $U_e$ beaufschlagbar und relativ zueinander sowie relativ zum Magnetlager 183 so angeordnet sind, dass bei einer jeweiligen Rotorbewegung entlang der jeweiligen Messachse $S_i$ in den beiden Sensorspulen 16, 18 entweder eine gegensinnige Induktivitätsänderung auftritt (vgl. die Fig. 6, 11 und 15) oder sich die Induktivität in einer der beiden Sensorspulen 16, 18 ändert und in der anderen Sensorspule zumindest im Wesentlichen unverändert bleibt (vgl. die Fig. 12 bis 14).

Die Positionserfassungsvorrichtung 10 umfasst jeweils Mittel 20 zur Bildung einer das modulierte analoge Sensorsignal $U_{sen}$ bildenden induzierten Sensorspannung $U_{sen}$ aus einem Differenzstrom $i_{diff}$, der sich aus den in den beiden einer jeweiligen Messachse $S_i$ zugeordneten Sensorspulen 16, 18 induzierten Strömen $i_1$, $i_2$ ergibt (vgl. insbesondere die Fig. 6, 12, 14 und 15).

Die Steuer- und/oder Auswerteeinrichtung 14 umfasst jeweils Mittel zur Erzeugung eines periodischen elektri-

schen Erregungssignals $U_e$. Die Sensorik 12 ist jeweils zur Modulation des Erregungssignals $U_e$ in Abhängigkeit von der Position x des Objektes, hier des Rotors 22, ausgeführt und liefert als Ausgangssignal ein entsprechend moduliertes analoges Sensorsignal $U_{sen}$.

Das periodische elektrische Erregungssignal $U_e$ kann beispielsweise durch ein zumindest im Wesentlichen sinus- oder cosinusförmiges Signal, beispielsweise eine entsprechende Erregungsspannung, gebildet sein. Grundsätzlich kann das periodische elektrische Erregungssignal $U_e$ jedoch auch eine von einer Sinus- oder Cosinusform abweichende Form besitzen.

Wie insbesondere aus den Fig. 6, 11, 12 und 14 ersichtlich, können die Mittel zur Bildung der das modulierte analoge Sensorsignal $U_{sen}$ bildenden induzierten Sensorspannung einen eingangsseitig mit den beiden Sensorspulen 16, 18 verbundenen und ausgangsseitig eine Ausgangsspule 24 aufweisenden Transformator 20 umfassen. Dabei sind die beiden Sensorspulen 16, 18 so an den Transformator 20 angeschlossen, dass sich eingangsseitig ein Differenzstrom $i_{diff}$ aus den induzierten Strömen $i_1$, $i_2$ ergibt. Zudem dient der Transformator 20 sowohl einer elektrischen Verstärkung als auch der Umwandlung des Differenzstroms $i_{diff}$ in die induzierte Sensorspannung $U_{sen}$.

Fig. 7 zeigt in schematischer Darstellung eine bisher übliche, herkömmliche synchronisierte Abtastung des Ausgangssignals der Sensorspuleneinheit gemäß Fig. 6 unter idealen Bedingungen. Dabei sind die zeitlichen Verläufe der verschiedenen Signale der Positionserfassungsvorrichtung 10 gemäß Fig. 6 wiedergegeben, wobei $U_e$ das Erregungssignal mit der Erregungsfrequenz $f_e$, $U_{sen1}$ das modulierte analoge Sensorsignal $U_{sen}$ bei maximaler Auslenkung x mit der Frequenz $f_s$ und $U_{sen2}$ das modulierte analoge Sensorsignal $U_{sen}$ bei minimaler Auslenkung x mit der Frequenz $f_s$ darstellt. Wie aus der Fig. 7 zu erkennen ist, ist die Frequenz $f_s$ des modulierten analogen Sensorsignals $U_{sen}$ stets gleich der Erregungsfrequenz $f_e$ des Erregungssignals $U_e$. Zudem existiert eine Phasenverschiebung $\Delta\varphi$ zwischen dem Erregungssignal $U_e$ und dem das Sensorausgangssignal bildenden modulierten analogen Sensorsignal $U_{sen}$. Diese Phasenverschiebung $\Delta\varphi$ ist im vorliegenden Fall als konstant angenommen. Dadurch kann die bisher übliche bezüglich der Erregungsfrequenz $f_e$ synchronisierte Abtastung des Ausgangssignals implementiert werden, bei der zum Abtastzeitpunkt stets der Scheitelwert des Sensorausgangs ermittelt wird. Lediglich bei für diesen Fall angenommenen idealen Bedingungen entspricht die bezüglich des elektrischen Erregungssignals $U_e$ synchronisierte Abtastung der Sensorausgangsspannung eindeutig der Position des Objekts bzw. Rotors entlang der Messspur zwischen den beiden Ausschlägen.

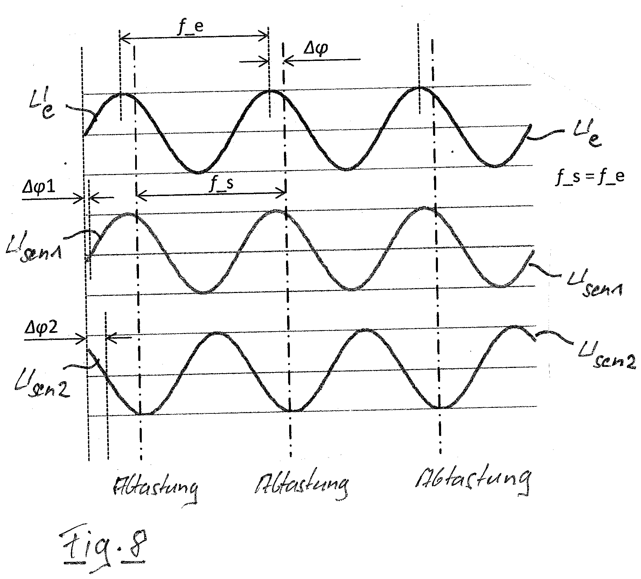

Demgegenüber zeigt Fig. 8 die herkömmliche bezüglich des Erregungssignals synchronisierte Abtastung des Ausgangssignals der Sensorspuleneinheit gemäß Fig. 6 unter realen Bedingungen. Wie aus der Fig. 8 ersichtlich, variiert die zuvor genannte Phasenverschiebung $\Delta\varphi$ des das Sensorausgangssignal bildenden modulierten analogen Sensorsignals $U_{sen}$ gegenüber dem Erregungssignal $U_e$ in Abhängigkeit von der Bewegung des Objekts bzw. Rotors entlang der Messspur. So erhöht sich die Induktivität der einen Spule mit der Bewegung des Objekts bzw. Rotors entlang der Messspur von einem Ausschlag zum anderen. Gleichzeitig verringert sich auch der Widerstand dieser einen Spule. Demgegenüber ändern sich die Induktivität und der Widerstand der anderen Spule gegensinnig. So wird bei einer entsprechenden Bewegung des Objekts bzw. Rotors die Induktivität dieser anderen Spule kleiner, während deren Widerstand erhöht wird. Dieses Phänomen ist in der Fig. 8 dargestellt. Danach unterscheidet sich die Phasenverschiebung $\Delta\varphi_1$ des modulierten analogen Sensorsignals $U_{sen1}$ bei maximalem Ausschlag x des Objekts bzw. Rotors gegenüber dem Erregungssignal $U_e$ von der Phasenverschiebung $\Delta\varphi_2$ des modulierten analogen Sensorsignals $U_{sen2}$ bei minimalem Ausschlag des Objektes bzw. Rotors gegenüber dem Erregungssignal $U_e$. Der durch diese positionsabhängige Phasenverschiebung bedingte Messfehler kann durch die bisher übliche bezüglich des Erregungssignals $U_e$ synchronisierte Abtastung nicht eliminiert werden.

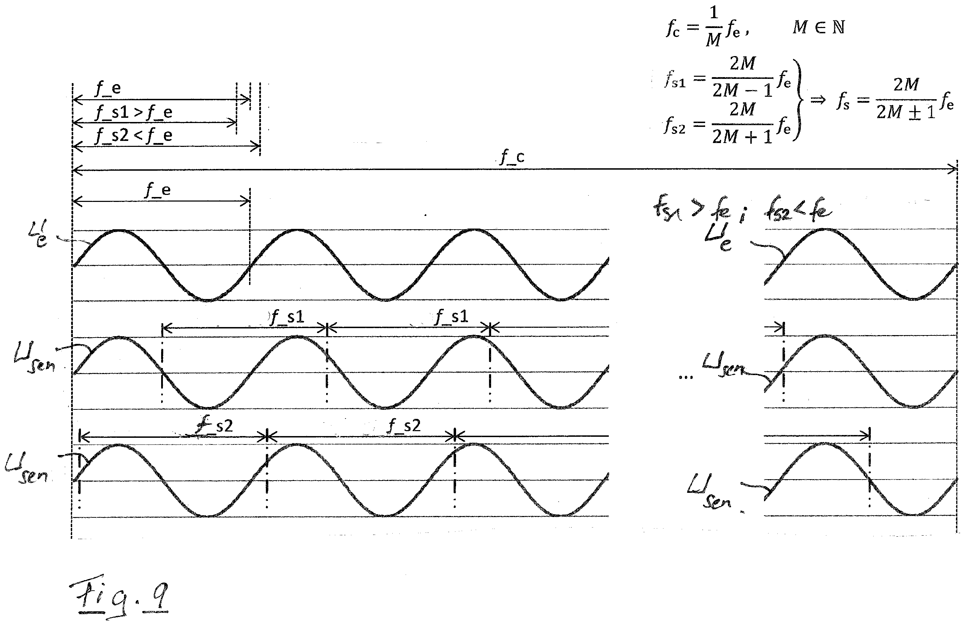

Fig. 9 zeigt eine beispielhafte erfindungsgemäße, gezielt asynchrone Abtastung des Ausgangssignals der Sensorspuleneinheit gemäß Fig. 6.

Dabei ist der berührungslosen Sensorik 12 eine bei einer Steuerfrequenz $f_c$ arbeitende digitale Steuer- und/oder Auswerteeinrichtung 14 zugeordnet. Auch diese Steuer- und/oder Auswerteeinrichtung 14 umfasst wieder Mittel zur Erzeugung eines periodischen elektrischen Erregungssignal $U_e$ mit einer Erregungsfrequenz $f_e$. Dabei ist diese Erregungsfrequenz jedoch durch die folgende Beziehung definiert:

$$f_e = M \cdot f_c,$$

wobei M eine natürliche Zahl ist.

Die betreffende berührungslose Sensorik 12 ist auch im vorliegenden Fall wieder zur Modulation des Erregungssignals $U_e$ in Abhängigkeit von der Position x des Objekts bzw. Rotors ausgeführt und liefert auch hier als Ausgangssignal wieder ein entsprechend moduliertes analoges Sensorsignal $U_{sen}$. Erfindungsgemäß umfasst die Steuer- und/oder Auswerteeinrichtung 14 jedoch Mittel zur A/D-Wandlung des modulierten analogen Sensorsignals $U_{sen}$ in ein digitales Sensorsignal, durch die das modulierte analoge Sensorsignal $U_{sen}$ mit einer bezüglich der Erregungsfrequenz $f_e$ asynchronen Abtastfrequenz $f_s$ abgetastet wird, für die die folgende Beziehung gilt:

$$f_s \neq f_e / N,$$

wobei N eine weitere, von M unabhängige natürliche Zahl ist.

Zudem umfasst die Steuer- und/oder Auswerteeinrichtung 14 mit der Steuerfrequenz $f_c$ arbeitende Rechenmittel zur Berechnung der Position x des Objektes bzw. Rotors auf der Basis des von den Mitteln zur A/D-Wandlung gelieferten digitalen Sensorsignals.

Bei dieser erfindungsgemäßen asynchronen Abtastung handelt es sich somit um eine asynchrone Überabtastung des Rückführungssignals eines Regelungssystems, das wiederum mit der digitalen Regelung bzw. der Steuerfrequenz $f_c$ synchronisiert wird. Durch die natürliche Zahl M in der Beziehung $f_e = M \cdot f_c$ wird die Stärke der Überabtastung bestimmt. Die Erregungsfrequenz $f_e$ des Erregungssignals $U_e$ entspricht somit dem M-fachen der Regel- oder Steuerfrequenz $f_c$. Die Abtastfrequenz $f_s$ ist jedoch ungleich der Erregungsfrequenz $f_e$. Zudem umfasst die Steuer- und/oder Auswerteeinrichtung 14 mit der Steuerfrequenz $f_c$ arbeitende Rechenmittel zur Berechnung der Position x des Objektes bzw. Rotors auf der Basis des von den Mitteln zur A/D-Wandlung gelieferten digitalen Sensorsignals.

Das modulierte analoge Sensorsignal $U_{sen}$ kann durch die Mittel zur A/D-Wandlung insbesondere mit einer asynchronen Abtastfrequenz $f_s$ abgetastet werden, die durch die folgende Beziehung definiert ist:

$$f_s = \frac{2M}{2M \pm 1} \cdot f_e,$$

wobei M wieder eine natürliche Zahl und $f_e$ die Erregungsfrequenz des periodischen elektrischen Erregungssignals ist.

Erfüllen die Abtastfrequenz $f_s$ und die Erregungsfrequenz $f_e$ die zuvor genannte Bedingung, so stellen die M Abtastpunkte genau eine Halbwelle des Sensorausgangssignals bzw. modulierten analogen Sensorsignals $U_{sen}$ dar. In dem Diagramm gemäß Fig. 9 ist außer dem Erregungssignal $U_e$ mit der Erregungsfrequenz $f_e$ das modulierte analoge Ausgangssignal $U_{sen}$ wiedergegeben, das zum einen mit der Abtastfrequenz $f_{s1} = \frac{2M}{2M-1} \cdot f_e$ und zum anderen mit der Abtastfrequenz $f_{s2} = \frac{2M}{2M+1} \cdot f_e$ abgetastet wird.

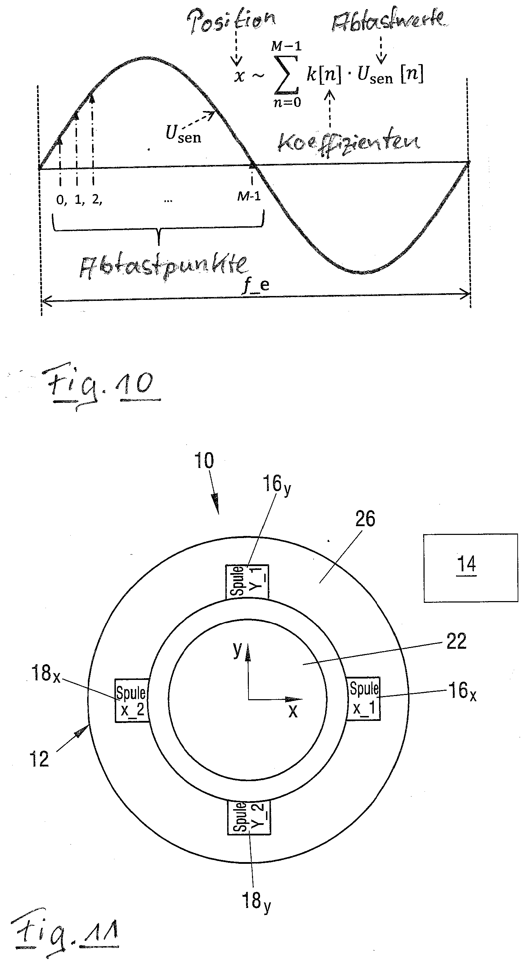

Fig. 10 zeigt die M Abtastpunkte eines solchen erfindungsgemäßen Regelzyklus.

Dabei können die Rechenmittel zur Berechnung der Position x des Objekts bzw. Rotors auf der Basis der M Abtastwerte des modulierten analogen Sensorsignals $U_{sen}$ der berührungslosen Sensorik 10 insbesondere entsprechend der folgenden Beziehung ausgeführt sein:

$$x = \sum_{n=0}^{M-1} k[n] \cdot U_{sen}[n],$$

wobei k[n] die Koeffizienten für die Berechnung sind.

Sind im vorliegenden Fall alle Koeffizienten k gleich, so bildet das Ergebnis die Fläche des Signals im betrachteten Zeitfenster ab. Die erhaltene Fläche ist auch proportional zur Position des Objektes bzw. Rotors und zumindest im Wesentlichen robust gegen kleinere Phasenverschiebungen des modulierten analogen Sensorsignals $U_{sen}$ gegenüber dem Erregungssignal $U_e$.

Die Mittel zur A/D-Wandlung können jedoch auch eine erste und eine davon verschiedene zweite Abtasteinheit umfassen, durch die das modulierte analoge Sensorsignal $U_{sen}$ jeweils mit einer Abtastfrequenz $f_s$ abgetastet wird, die durch die folgende Beziehung definiert ist:

$$f_s = \frac{2M}{2M \pm 1} \cdot f_e,$$

wobei M wieder eine natürliche Zahl und $f_e$ die Erregungsfrequenz des periodischen elektrischen Erregungssignals $U_e$ ist.

Dabei besteht zwischen dem ersten Auftreten des ersten Abtastwerts der ersten Abtasteinheit und dem ersten Auftreten des ersten Abtastwerts der zweiten Abtasteinheit ein Zeitversatz $\Delta T$, der folgende Voraussetzungen erfüllt:

$$0 < \Delta T < T_e,$$

wobei $T_e$ die Periode des periodischen elektrischen Erregungssignals $U_e$ ist.

Im vorliegenden Fall können die Rechenmittel zur Berechnung der Position x des Objekts bzw. Rotors auf der Basis der 2M Abtastwerte der zur Abtastung des modulierten analogen Sensorsignals $U_{sen}$ der berührungslosen Sensorik 10 vorgesehenen Mittel zur A/D-Wandlung entsprechend der folgenden Beziehung ausgeführt sein:

$$x = \sum_{n=0}^{M-1} k_A[n] \cdot U_{senA}[n] + \sum_{n=0}^{M-1} k_B[n] \cdot U_{sen_B}[n],$$

wobei $k_A[n]$ und $k_B[n]$ die Koeffizienten der Berechnung sind.

Wie im Einleitungsteil bereits erwähnt, ist allerdings die Anzahl der Abtasteinheiten nicht auf lediglich zwei Abtasteinheiten beschränkt. Grundsätzlich können beliebig viele Abtasteinheiten vorgesehen sein, beispielsweise 2, 3, 4, 5 oder 6 Abtasteinheiten.

Die Sensorik 12 und/oder die Steuer- und/oder Auswerteeinrichtung 14 können auf einer Leiterplatte 26 vorgesehen sein (vgl. die Fig. 11 und 13).

Zur berührungslosen Erfassung der Position des zumindest teilweise magnetgelagerten Objektes bzw. Rotors 22 entlang mehrerer Messachsen $S_i$ kann die Sensorik 12 eine entsprechende Mehrzahl von Sensorspuleneinheiten aus jeweils zwei insbesondere als Luftspulen ausgeführten Sensorspulen 16, 18 umfassen (vgl. die Fig. 6 und 11 bis 13).

Bei der Ausführung gemäß Fig. 6 ist einer Messachse $S_i$ eine beispielhafte Sensorspuleneinheit mit einer differenziellen Spulenanordnung zugeordnet, bei der die beiden jeweils mit dem periodischen elektrischen Erregungssignal $U_e$ beaufschlagten Sensorspulen 16, 18 relativ zueinander sowie relativ zum benachbarten Magnetlager bzw. Rotor 22 so angeordnet sind, dass bei einer jeweiligen Rotorbewegung in Richtung der Messachse $S_i$ eine gegensinnige Induktivitätsänderung auftritt. Dabei wird das das Sensorausgangssignal bildende modulierte analoge Sensorsignal $U_{sen}$ erfindungsgemäß in der zuvor im Zusammenhang mit der Fig. 6, 9 und 10 beschrieben Weise bezüglich des Erregungssignals $U_e$ asynchron abgetastet und die Position des Objektes bzw. Rotors in der zuvor beschriebenen Weise auf der Basis der asynchronen Abtastwerte berechnet.

Für eine Erfassung der radialen Bewegung des Rotors 22 kann gemäß Fig. 11 beispielsweise jeder der beiden Messachsen x und y jeweils eine solche differenzielle Spulenanordnung aus zwei Sensorspulen $16_x$, $18_x$ bzw. $16_y$, $18_y$ zugeordnet sein. Die Induktivität der beiden Sensorspulen einer jeweiligen Sensorspuleneinheit ist somit jeweils von deren in Richtung der Messachse $S_i$ gemessenen Abstand vom Magnetlager bzw. Rotor 22 abhängig. Der Sensorausgang bzw. das modulierte analoge Sensorsignal einer jeweiligen Spulenanordnung wird erfindungsgemäß wieder asynchron bezüglich des Erregungssignals abgetastet, wie dies im Zusammenhang mit der Fig. 6, 9 und 10 beschrieben wurde. Aus den asynchronen Abtastwerten kann dann in der zuvor beschriebenen Weise wieder die Position des Objektes bzw. Rotors berechnen werden.

Fig. 12 zeigt eine einer Messachse $S_i$ zugeordnete beispielhafte Sensorspuleneinheit mit einer absoluten Spulenanordnung, bei der die beiden jeweils mit dem periodischen elektrischen Erregungssignal $U_e$beaufschlagten Sensorspulen 16, 18 relativ zueinander sowie relativ zum benachbarten Magnetlager bzw. Rotor so angeordnet sind, dass sich die Induktivität nur in einer der beiden Sensorspulen 16, 18 ändert und in der anderen Sensorspule unverändert bleibt. Das Sensorausgangssignal bzw. das modulierte analoge Sensorsignal $U_{sen}$ wird auch hier erfindungsgemäß wieder bezüglich des Erregungssignals $U_e$ asynchron abgetastet, wie dies im Zusammenhang mit den Fig. 6, 9 und 10 beschrieben wurde. Aus den asynchronen Abtastwerten kann dann in der zuvor beschriebenen Weise wieder die Position des Objektes bzw. Rotors berechnen werden.

Für eine Erfassung der axialen Bewegung des Rotors 22 kann gemäß Fig. 13 beispielsweise der Messachse z, die der Rotorachse entspricht, eine solche absolute Spulenanordnung aus zwei Sensorspulen $16_z$, $18_z$ zugeordnet sein. Bei diesem in Fig. 13 dargestellten Ausführungsbeispiel umfasst diese absolute Sensorspulenanordnung beispielsweise zwei auf einer Leiterplatte 26 vorgesehene, sowohl relativ zueinander als auch relativ zur Messachse z bzw. Rotorachse konzentrische Sensorspulen $16_z$, $18_z$ unterschiedlichen Durchmessers. Dabei dient die Sensorspule $16_z$ als Messspule und die Sensorspule $18_z$ als Referenzspule. Die Induktivität der Messspule $16_z$ ist im vorliegenden Fall von deren in Richtung der Messachse z bzw. in Richtung der Rotorachse gemessenen Abstand vom Magnetlager bzw. vom Rotor abhängig. Die Induktivität der Referenzspule $18_z$ bleibt konstant.

In den beiden in den Fig. 6 und 11 bzw. 12 und 13 dargestellten Ausführungsbeispielen ergibt sich jeweils ein Differenzstrom $i_{diff}$ aus den in den beiden einer jeweiligen Messachse $S_i$ zugeordneten Sensorspulen 16, 18 induzierten Strömen $i_1$, $i_2$. Dabei wird die am Ausgang des Transformators 20 erzeugte induzierte Sensorspannung bzw. das modulierte analoge Sensorsignal $U_{sen}$ zur Erfassung einer jeweiligen Rotorbewegung entlang der betreffenden Sensorachse $S_i$ wie im Zusammenhang mit den Fig. 6, 9 und 10 beschrieben wieder bezüglich des Erregungssignals $U_e$ asynchron abgetastet. Auch die Position x des Rotors kann wieder in der anhand der Fig. 6, 9 und 10 beschriebenen Weise auf der Basis der asynchron abgetasteten Messwerte berechnet werden. Das periodische elektrische Erregungssignal $U_e$ ist im vorliegenden Fall beispielsweise durch eine sinus- oder cosinusförmige Spannung gebildet. Wie eingangs bereits erwähnt, ist grundsätzlich jedoch auch eine von einer Sinus- oder Cosinusform abweichende Form des periodischen elektrischen Erregungssignals $U_e$ denkbar.

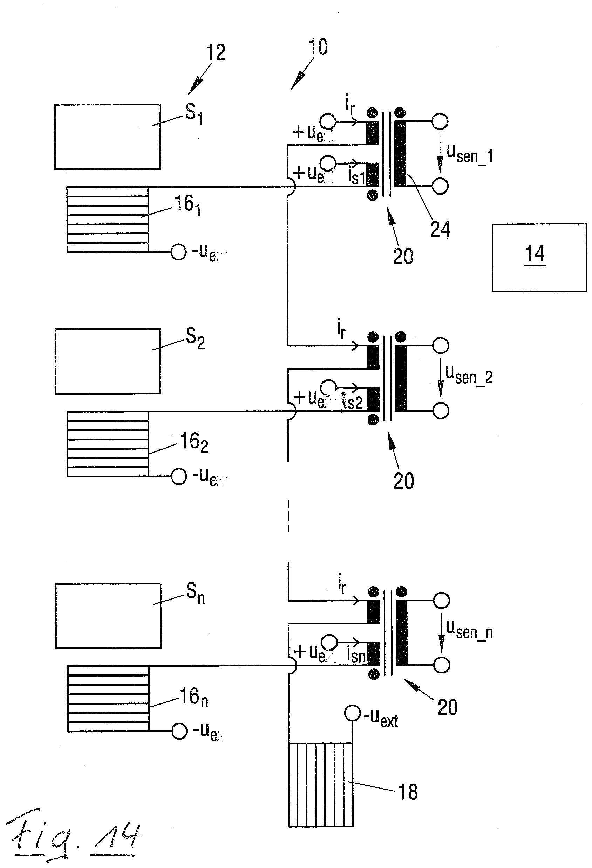

Fig. 14 zeigt beispielhaft eine erweiterte absolute Spulenanordnung zur Erfassung der Rotorbewegung entlang mehrerer Messachsen $S_i$, wobei die den verschiedenen Messachsen $S_i$ zugeordneten Spuleneinheiten jeweils eine als Messspule dienende Sensorspule $16_i$ aufweisen und für die verschiedenen Spuleneinheiten eine gemeinsame Referenzspule 18 vorgesehen ist. Aus den verschiedenen Spuleneinheiten ergeben sich über die zugeordneten Transformatoren 20 in der zuvor beschriebenen Weise die entsprechenden induzierten Spannungen bzw. modellierten analogen Sensorsignale $U_{sen}$. Zur Ermittlung der Rotorposition werden diese modulierten analogen Sensorsignale $U_{sen}$ erfindungsgemäß jeweils wieder in der zuvor beschriebenen asynchronen Weise abgetastet, um aus den daraus erhaltenen asynchronen Abtastwerten in der zuvor beschriebenen Weise die Position zu berechnen.

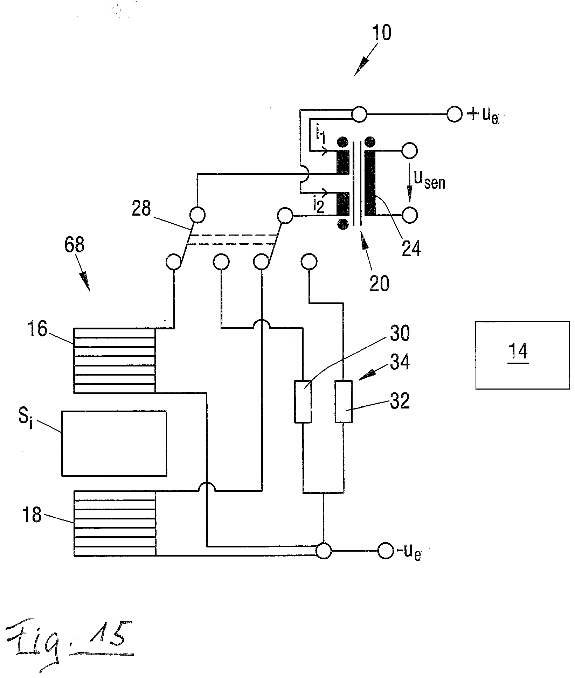

Fig. 15 zeigt eine beispielhafte Temperaturkompensations-Schaltung einer erfindungsgemäßen Positionserfassungsvorrichtung 10. Danach kann zwischen dem Transformator 20 und den beiden einer jeweiligen Messachse $S_i$ zugeordneten Sensorspulen 16, 18 ein über die Steuer- und/oder Auswerteeinrichtung 14 ansteuerbarer, insbesondere analoger Schalter 28 vorgesehen sein. Über diesen Schalter 28 kann der Transformator 20 während des Erfassungsbetriebs zur Bestimmung des jeweils aktuellen Verstärkungsfaktors des Transformators 20 wiederholt von den beiden Sensorspulen 16, 18 auf eine insbesondere zwei feste Widerstände 30, 32 umfassende Widerstandsanordnung 34 konstanter Impedanz umgeschaltet werden.

Über die Steuer- und/oder Auswerteeinrichtung 14 kann anhand eines Vergleichs des bestimmten jeweiligen aktuellen Verstärkungsfaktors des Transformators 20 mit einem insbesondere gespeicherten Referenzwert die jeweils aktuelle Variation des Verstärkungsfaktors des Transformators 20 festgestellt werden. Anhand der festgestellten Variation kann über die Steuer- und/oder Auswerteeinrichtung 14 schließlich die während des Erfassungsbetriebs als Ausgangsspannung erzeugte induzierte Sensorspannung $U_{sen}$ bzw. das modulierte analoge Sensorsignal $U_{sen}$ korrigiert werden, um insbesondere durch die Temperatur des Transformators 20 und Toleranzen des Systems bedingte Einflüsse auf die induzierte Sensorspannung $U_{sen}$ zu kompensieren. Als feste Widerstände 30, 32 der Widerstandsanordnung können insbesondere Präzisionswiderstände vorgesehen sein.

Das das Sensorausgangssignal bildende modulierte analoge Sensorsignal $U_{sen}$ wird erfindungsgemäß wieder, wie anhand der Fig. 6, 9 und 10 beschrieben, bezüglich des Erregungssignals $U_e$ asynchron abgetastet. Aus den asynchron abgetasteten Abtastwerten kann in der zuvor beschriebenen Weise dann wieder die Position des Objektes bzw. Rotors 22 berechnet werden.

Während die Temperaturkompensations-Schaltung im vorliegenden Fall beispielsweise in Verbindung mit einer Sensorspuleneinheit mit einer differenziellen Spulenanordnung versehen ist, kann eine entsprechende Temperaturkompensations-Schaltung auch in Verbindung mit einer Sensorspuleneinheit mit einer absoluten Spulenanordnung vorgesehen sein. Im Übrigen kann die Positionserfassungsvorrichtung 10 zumindest im Wesentlichen wieder so ausgeführt sein, wie dies zuvor beschrieben wurde. So erfolgt auch im vorliegenden Fall anders als bei einer herkömmlichen elektrischen Verstärkung des Rohmesssignals erfindungsgemäß eine elektromagnetische Verstärkung über einen Transformator 20, wodurch sich eine hohe Verstärkung und ein sehr niedriges Rauschniveau ergeben. Zudem wird das Sensorausgangssignal bzw. das modulierte analoge Sensorsignal $U_{sen}$ erfindungsgemäß wieder asynchron abgetastet und die Rotorposition erfindungsgemäß wieder auf der Basis der asynchronen Abtastwerte berechnet.

Bei der in der Fig. 15 dargestellten, der Kompensation von Toleranzen und Temperatureinflüssen des Systems dienenden Temperaturkompensations-Schaltung kann der Schalter 28 über ein entsprechendes Steuersignal der Steuer- und/oder Auswerteeinrichtung 14 während der Messung zwischen den beiden Sensorspulen 16, 18 mit variierender Impedanz und den beiden festen Widerständen 30, 32 der Widerstandsanordnung 34 mit konstanter Impedanz umgeschaltet werden. Beim Einschalten des Messsystems kann die Ausgangsspannung bei konstanter Impedanz als Referenz gespeichert werden. Während des Messbetriebs kann regelmäßig auf die konstante Impedanz umgeschaltet werden. Aus der aktuellen Ausgangsspannung bei konstanter Impedanz und der gespeicherten Referenz kann die aktuelle Variation des Verstärkungsfaktors festgestellt werden. Dadurch kann die Ausgangsspannung aus dem Sensorbetrieb nachgestellt bzw. korrigiert werden, so dass man ein von der Temperatur des Transformators unabhängiges Messergebnis erhält.

Auch im vorliegenden Fall wird das Sensorausgangssignal bzw. das modulierte analoge Sensorsignal $U_{sen}$ erfindungsgemäß wieder wie zuvor anhand der Fig. 6, 9 und 10 beschrieben bezüglich des Erregungssignals $U_a$ asynchron abgetastet und die Rotorposition auf der Basis der asynchronen Abtastwerte berechnet.

Die im Zusammenhang mit den verschiedenen Ausführungsbeispielen genannten Sensorspulen können jeweils stationär im Bereich des jeweiligen Magnetlagers angeordnet sein. Bei einer jeweiligen differenziellen Spulenanordnung der in den Fig. 10 und 11 dargestellten Art können die beiden einer jeweiligen Messachse $S_i$ zugeordneten Sensorspulen 16, 18 insbesondere jeweils parallel zur Achse des benachbarten Magnetlagers bzw. parallel zur Rotorachse ausgerichtet sein. Demgegenüber können bei einer jeweiligen absoluten Spulenanordnung der in den Fig. 12 und 13 dargestellten Art die beiden der Messachse z zugeordneten Sensorspulen 16, 18 insbesondere koaxial zum benachbarten Magnetlager bzw. koaxial zur Rotorachse angeordnet sein und unterschiedliche Durchmesser aufweisen.

Eine jeweilige erfindungsgemäße Positionserfassungsvorrichtung 10 kann beispielsweise einer Vakuumpumpe der im Zusammenhang mit den Fig. 1 bis 5 beschriebenen Art und insbesondere deren Permanentmagnetlager zugeordnet sein.

Bezugszeichenliste

| | |
|---|---|
| 10 | Positionserfassungsvorrichtung |
| 12 | berührungslose Sensorik |
| 14 | Steuer- und/oder Auswerteeinrichtung |
| 16 | Sensorspule |
| 18 | Sensorspule |
| 20 | Mittel zur Erzeugung einer induzierten Sensorspannung, Transformator |
| 22 | Objekt, Rotor |
| 24 | Ausgangsspule |
| 26 | Leiterplatte |
| 28 | Schalter |
| 30 | Widerstand |
| 32 | Widerstand |
| 34 | Widerstandsanordnung |
| 111 | Turbomolekularpumpe |
| 113 | Einlassflansch |
| 115 | Pumpeneinlass |
| 117 | Pumpenauslass |
| 119 | Gehäuse |
| 121 | Unterteil |
| 123 | Elektronikgehäuse |
| 125 | Elektromotor |
| 127 | Zubehöranschluss |
| 129 | Datenschnittstelle |
| 131 | Stromversorgungsanschluss |
| 133 | Fluteinlass |
| 135 | Sperrgasanschluss |
| 137 | Motorraum |
| 139 | Kühlmittelanschluss |
| 141 | Unterseite |
| 143 | Schraube |
| 145 | Lagerdeckel |
| 147 | Befestigungsbohrung |
| 148 | Kühlmittelleitung |
| 149 | Rotor |
| 151 | Rotationsachse |
| 153 | Rotorwelle |
| 155 | Rotorscheibe |
| 157 | Statorscheibe |
| 159 | Abstandsring |
| 161 | Rotornabe |
| 163 | Holweck-Rotorhülse |
| 165 | Holweck-Rotorhülse |
| 167 | Holweck-Statorhülse |
| 169 | Holweck-Statorhülse |
| 171 | Holweck-Spalt |
| 173 | Holweck-Spalt |
| 175 | Holweck-Spalt |
| 179 | Verbindungskanal |
| 181 | Wälzlager |
| 183 | Permanentmagnetlager |

| 185 | Spritzmutter |
| 187 | Scheibe |
| 189 | Einsatz |
| 191 | rotorseitige Lagerhälfte |
| 193 | statorseitige Lagerhälfte |
| 195 | Ringmagnet |
| 197 | Ringmagnet |
| 199 | Lagerspalt |
| 201 | Trägerabschnitt |
| 203 | Trägerabschnitt |
| 205 | radiale Strebe |
| 207 | Deckelelement |
| 209 | Stützring |
| 211 | Befestigungsring |
| 213 | Tellerfeder |
| 215 | Not- bzw. Fanglager |
| 217 | Motorstator |
| 219 | Zwischenraum |
| 221 | Wandung |
| 223 | Labyrinthdichtung |

| $S_i$ | Messachse |
| $U_e$ | periodisches elektrisches Erregungssignal, Erregungsspannung |
| $U_{sen}$ | induzierte Sensorspannung, moduliertes analoges Ausgangssignal |
| $f_{s1}$ | Abtastfrequenz |
| $f_{s2}$ | Abtastfrequenz |
| $i_1$ | induzierter Strom |
| $i_2$ | induzierter Strom |
| $i_{diff}$ | Differenzstrom |

**Patentansprüche**

1. Vorrichtung (10) zur Erfassung der Position (x) eines zumindest teilweise magnetgelagerten Objektes in Form eines zumindest teilweise magnetgelagerten Rotors (22), insbesondere eines zumindest teilweise magnetgelagerten Rotors einer Vakuumpumpe, bevorzugt einer Turbomolekularpumpe,
mit einer berührungslosen Sensorik (12) und einer dieser zugeordneten, bei einer Steuerfrequenz ($f_c$) arbeitenden digitalen Steuer- und/oder Auswerteeinrichtung (14),

   - wobei die Steuer- und/oder Auswerteeinrichtung (14) Mittel zur Erzeugung eines periodischen elektrischen Erregungssignals ($U_e$) mit einer Erregungsfrequenz ($f_e$) umfasst, die durch die folgende Beziehung definiert ist: $f_e = M \cdot f_c$, wobei M eine natürliche Zahl >1 ist,
   - wobei die berührungslose Sensorik (12) zur Modulation des Erregungssignals ($U_e$) in Abhängigkeit von der Position (x) des Rotors ausgeführt ist und als Ausgangssignal ein entsprechend moduliertes analoges Sensorsignal ($U_{sen}$) liefert,
   - wobei die Steuer- und/oder Auswerteeinrichtung (14) Mittel zur A/D-Wandlung des modulierten analogen Sensorsignals ($U_{sen}$) in ein digitales Sensorsignal umfasst, durch die das modulierte analoge Sensorsignal ($U_{sen}$) mit einer bezüglich der Erregungsfrequenz ($f_e$) asynchronen Abtastfrequenz $f_s$ abgetastet wird, für die die folgende Beziehung gilt:

$$f_s \neq f_e / N,$$

   wobei N eine weitere, von M unabhängige natürliche Zahl ist,
   - wobei die Steuer- und/oder Auswerteeinrichtung (14) mit der Steuerfrequenz ($f_c$) arbeitende Rechenmittel zur Berechnung der Position (x) des Rotors auf der Basis des von den Mitteln zur A/D-Wandlung gelieferten digitalen Sensorsignals umfasst, und
   - wobei das modulierte analoge Sensorsignal ($U_{sen}$) durch die Mittel zur A/D-Wandlung mit einer asynchronen

Abtastfrequenz $f_s$ abgetastet wird, die durch die folgende Beziehung definiert ist:

$$f_s = \frac{2M}{2M \pm 1} \cdot f_e,$$

wobei M wieder die natürliche Zahl >1 und $f_e$ die Erregungsfrequenz des periodischen elektrischen Erregungssignals ist.

2. Vorrichtung nach Anspruch 1,
**dadurch gekennzeichnet, dass** die Rechenmittel zur Berechnung der Position (x) des Rotors auf der Basis der M Abtastwerte des modulierten analogen Sensorsignals ($U_{sen}$) der berührungslosen Sensorik (12) entsprechend der folgenden Beziehung ausgeführt sind:

$$x = \sum_{n=0}^{M-1} k[n] \cdot U_{sen}[n],$$

wobei M wieder die natürliche Zahl >1 ist und k[n] die Koeffizienten für die Berechnung sind.

3. Vorrichtung nach einem der vorstehenden Ansprüche,
**dadurch gekennzeichnet, dass** die Mittel zur A/D-Wandlung eine Anzahl $\xi$, wobei $\xi \geq 2$, verschiedener Abstasteinheiten umfassen, durch die das modulierte analoge Sensorsignal ($U_{sen}$) jeweils mit einer Abtastfrequenz ($f_s$) abgetastet wird, die durch die folgende Beziehung definiert ist:

$$f_s = \frac{2M}{2M \pm 1} \cdot f_e,$$

wobei M wieder die natürliche Zahl >1 und $f_e$ die Erregungsfrequenz des periodischen elektrischen Erregungssignals ($U_e$) ist,
wobei zwischen dem ersten Auftreten des ersten Abtastwertes einer Abtasteinheit und dem ersten Auftreten des ersten Abtastwertes der unmittelbar folgenden Abtasteinheit ein Zeitversatz ($\Delta T$) besteht, der folgende Voraussetzung erfüllt:

$$0 < \Delta T < T_e,$$

wobei $T_e$ die Periode des periodischen elektrischen Erregungssignals ($U_e$) ist.

4. Vorrichtung nach einem der vorstehenden Ansprüche,
**dadurch gekennzeichnet, dass** die Rechenmittel zur Berechnung der Position (x) des Rotors auf der Basis von $\xi$ · M Abtastwerten, wobei $\xi \geq 2$, der zur Abtastung des modulierten analogen Sensorsignals ($U_{sen}$) der berührungslosen Sensorik (12) vorgesehenen Mittel zur A/D-Wandlung entsprechend der folgenden Beziehung ausgeführt sind:

$$x = \sum_{n=0}^{M-1} k_1[n] \cdot U_{sen\_1}[n] + \sum_{n=0}^{M-1} k_2[n] \cdot U_{sen\_2}[n] + \cdots + \sum_{n=0}^{M-1} k_\xi[n] \cdot U_{sen\_\xi}[n],$$

wobei M wieder die natürliche Zahl >1 ist und $k_1[n]$ bis $k_\xi[n]$ die Koeffizienten der Berechnung sind.

5. Vorrichtung nach einem der vorstehenden Ansprüche,

**dadurch gekennzeichnet, dass** die berührungslose Sensorik (12) zur Erfassung einer Objektbewegung entlang einer jeweiligen Messachse ($S_i$) jeweils eine Sensorspuleneinheit mit wenigstens zwei Sensorspulen (16, 18) umfasst, die über die Steuer- und/oder Auswerteeinrichtung (14) jeweils mit dem periodischen elektrischen Erregungssignal ($U_e$) beaufschlagbar und relativ zueinander sowie relativ zum Magnetlager (183) des magnetgelagerten Rotors so angeordnet sind, dass bei einer jeweiligen Objektbewegung entlang der jeweiligen Messachse ($S_i$) in den beiden Sensorspulen (16, 18) entweder eine gegensinnige Induktivitätsänderung auftritt oder sich die Induktivität nur in einer der beiden Sensorspulen (16, 18) ändert und in der anderen Sensorspule zumindest im Wesentlichen unverändert bleibt,
wobei insbesondere vorgesehen ist,
dass Mittel (20) zur Bildung einer das modulierte analoge Sensorsignal ($U_{sen}$) bildenden induzierten Sensorspannung aus einem Differenzstrom ($i_{diff}$) vorgesehen sind, der sich aus den in den beiden einer jeweiligen Messachse ($S_i$) zugeordneten Sensorspulen (16, 18) induzierten Strömen ($i_1$, $i_2$) ergibt, wobei die das modulierte analoge Sensorsignal ($U_{sen}$) bildende induzierte Sensorspannung über die Steuer- und/oder Auswerteeinrichtung (14) zur Erfassung einer jeweiligen Objektbewegung entlang der betreffenden Sensorachse ($S_i$) mit einer bezüglich der Erregungsfrequenz ($f_e$) asynchronen Abtastfrequenz ($f_s$) abtastbar ist.

6. Vorrichtung nach einem der vorstehenden Ansprüche,
**dadurch gekennzeichnet, dass** das periodische elektrische Erregungssignal ($U_e$) durch ein zumindest im Wesentlichen sinus- oder cosinusförmiges Signal gebildet ist oder eine von einer Sinus- oder Cosinusform abweichende Form besitzt.

7. Vorrichtung nach Anspruch 5 oder 6,

**dadurch gekennzeichnet, dass** die Mittel zur Bildung der das modulierte analoge Sensorsignal ($U_{sen}$) bildenden induzierten Sensorspannung einen eingangsseitig mit den beiden Sensorspulen (16, 18) verbundenen und ausgangsseitig eine Ausgangsspule (24) aufweisenden Transformator (20) umfassen,
wobei insbesondere vorgesehen ist,
dass zwischen dem Transformator und den beiden einer jeweiligen Messachse ($S_i$) zugeordneten Sensorspulen (16, 18) ein über die Steuer- und/oder Auswerteeinrichtung (14) ansteuerbarer, insbesondere analoger Schalter (28) vorgesehen ist, über den der Transformator (20) während des Erfassungsbetriebs zur Bestimmung des jeweils aktuellen Verstärkungsfaktors des Transformators (20) wiederholt von den beiden Sensorspulen (16, 18) auf eine, insbesondere zwei feste Widerstände (30, 32) umfassende, Widerstandsanordnung (34), bevorzugt mit konstanter Impedanz, umschaltbar ist.

8. Vorrichtung nach Anspruch 7,
**dadurch gekennzeichnet, dass** über die Steuer- und/oder Auswerteeinrichtung (14) anhand eines Vergleichs des bestimmten jeweiligen aktuellen Verstärkungsfaktors des Transformators (20) mit einem insbesondere gespeicherten Referenzwert die jeweils aktuelle Variation des Verstärkungsfaktors des Transformators (20) feststellbar ist.

9. Vorrichtung nach Anspruch 8,
**dadurch gekennzeichnet, dass** über die Steuer- und/oder Auswerteeinrichtung (14) anhand der festgestellten jeweils aktuellen Variation des Verstärkungsfaktors des Transformators (20) die während des Erfassungsbetriebs als Ausgangsspannung erzeugte, das modulierte analoge Sensorsignal ($U_{sen}$) bildende induzierte Sensorspannung korrigierbar ist, um, insbesondere durch die Temperatur des Transformators (20) bedingte, Einflüsse auf die das modulierte analoge Sensorsignal ($U_{sen}$) bildende induzierte Sensorspannung zu kompensieren.

10. Vorrichtung nach einem der vorstehenden Ansprüche,
**dadurch gekennzeichnet, dass** die berührungslose Sensorik (12), insbesondere eine jeweilige Sensorspuleneinheit (16, 18), und/oder die Steuer- und/oder Auswerteeinrichtung (14) auf einer Leiterplatte (26) vorgesehen sind.

11. Vorrichtung nach einem der vorstehenden Ansprüche,
**dadurch gekennzeichnet, dass** die berührungslose Sensorik (12) zur berührungslosen Erfassung der Position des zumindest teilweise magnetgelagerten Rotors (22) entlang mehrerer Messachsen ($S_i$) eine entsprechende Mehrzahl von Sensorspuleneinheiten mit jeweils zumindest zwei Sensorspulen (16, 18) umfasst.

12. Vorrichtung nach einem der Ansprüche 5-11,

**dadurch gekennzeichnet , dass** eine jeweilige Sensorspuleneinheit zur Bildung einer differenziellen Spulenanordnung, bei der in den beiden Sensorspulen (16, 18) bei einer jeweiligen radialen Objektbewegung eine gegensinnige Induktivitätsänderung auftritt, zwei auf einander gegenüberliegenden Seiten des benachbarten Magnetlagers (183) des magnetgelagerten Rotors angeordnete Sensorspulen (16, 18) umfasst,
und/oder dass eine jeweilige Sensorspuleneinheit zur Bildung einer absoluten Spulenanordnung, bei der sich bei einer jeweiligen axialen Objektbewegung die Induktivität nur in einer der beiden Sensorspulen (16, 18) ändert und in der als Referenz dienenden anderen Sensorspule unverändert bleibt, mit relativ zueinander konzentrischen Sensorspulen (16, 18) unterschiedlicher Durchmesser ausgeführt ist.

**13.** Vakuumpumpe, insbesondere Turbomolekularpumpe, mit einem Stator und einem relativ zum Stator um die Rotorachse (18) drehbar gelagerten Rotor, und mit einer Vorrichtung (10) nach zumindest einem der vorstehenden Ansprüche zur Erfassung der Position des Rotors.

**14.** Verfahren zur Erfassung der Position (x) eines zumindest teilweise magnetgelagerten Objektes in Form eines zumindest teilweise magnetgelagerten Rotors (22), insbesondere eines zumindest teilweise magnetgelagerten Rotors einer Vakuumpumpe, bevorzugt einer Turbomolekularpumpe, bei dem

- mittels einer bei einer Steuerfrequenz ($f_c$) arbeitenden digitalen Steuer- und/oder Auswerteeinrichtung (14) ein periodisches elektrisches Erregungssignals ($U_e$) mit einer Erregungsfrequenz ($f_e$) erzeugt wird, die durch die folgende Beziehung definiert ist:

$$f_e = M \cdot f_c,$$

wobei M eine natürliche Zahl >1 ist,
- mittels einer berührungslosen Sensorik (12) das Erregungssignal ($U_e$) in Abhängigkeit von der Position (x) des Rotors moduliert und als Ausgangssignal ein entsprechend moduliertes analoges Sensorsignal ($U_{sen}$) erzeugt wird,
- mittels der Steuer- und/oder Auswerteeinrichtung (14) eine A/D-Wandlung des berührungslosen analogen Sensorsignals ($U_{sen}$) in ein digitales Sensorsignal durchgeführt wird, mit der das modulierte analoge Sensorsignal ($U_{sen}$) mit einer bezüglich der Erregungsfrequenz ($f_e$) asynchronen Abtastfrequenz ($f_s$) abgetastet wird, für die die folgende Beziehung gilt:

$$f_s \neq f_e / N,$$

wobei N eine weitere, von M unabhängige natürliche Zahl ist,
- mittels der Steuer- und/oder Auswerteeinrichtung (14) mit der Steuerfrequenz ($f_c$) die Position (x) des Rotors auf der Basis des durch die A/D-Wandlung erzeugten digitalen Sensorsignals berechnet wird, und
- das modulierte analoge Sensorsignal ($U_{sen}$) durch die A/D-Wandlung mit einer asynchronen Abtastfrequenz $f_s$ abgetastet wird, die durch die folgende Beziehung definiert ist:

$$f_s = \frac{2M}{2M \pm 1} \cdot f_e,$$

wobei M wieder die natürliche Zahl >1 und $f_e$ die Erregungsfrequenz des periodischen elektrischen Erregungssignals ist.

**Claims**

**1.** An apparatus (10) for detecting the position (x) of an at least partly magnetically supported object in the form of an at least partly magnetically supported rotor (22), in particular an at least partly magnetically supported rotor of a vacuum pump, preferably a turbomolecular pump,
said apparatus (10) comprising a contactless sensor system (12) and a digital control and/or evaluation device (14) which is associated therewith and which works at a control frequency ($f_c$),

- wherein the control and/or evaluation device (14) comprises means for generating a periodic electrical excitation signal ($U_e$) having an excitation frequency ($f_e$) which is defined by the following relationship:

$$f_e = M \cdot f_c,$$

where M is a natural number >1,
- wherein the contactless sensor system (12) is designed to modulate the excitation signal ($U_e$) in dependence

on the position (x) of the rotor and provides a correspondingly modulated analog sensor signal ($U_{sen}$) as an output signal,

- wherein the control and/or evaluation device (14) comprises means for an A/D conversion of the modulated analog sensor signal ($U_{sen}$) into a digital sensor signal, the modulated analog sensor signal ($U_{sen}$) being sampled by said means for an A/D conversion at a sampling frequency $f_s$ which is asynchronous with respect to the excitation frequency ($f_e$) and to which the following relationship applies:

$$f_s \neq f_e / \ N,$$

where N is a further natural number which is independent of M,

- wherein the control and/or evaluation device (14) comprises calculation means working at the control frequency ($f_c$) for calculating the position (x) of the rotor on the basis of the digital sensor signal provided by the means for an A/D conversion, and

- wherein the modulated analog sensor signal ($U_{sen}$) is sampled by the means for an A/D conversion at an asynchronous sampling frequency $f_s$ which is defined by the following relationship:

$$f_s = \frac{2M}{2M \pm 1} \cdot f_e,$$

where M is again the natural number >1 and $f_e$ is the excitation frequency of the periodic electrical excitation signal.

2. An apparatus in accordance with claim 1,
   **characterized in that** the calculation means for calculating the position (x) of the rotor on the basis of the M sample values of the modulated analog sensor signal ($U_{sen}$) of the contactless sensor system (12) are designed in accordance with the following relationship:

$$x = \sum_{n=0}^{M-1} k[n] \cdot U_{sen}[n],$$

where M is again the natural number >1 and k[n] are the coefficients for the calculation.

3. An apparatus in accordance with one of the preceding claims,
   **characterized in that** the means for an A/D conversion comprise a number $\xi$, where $\xi \geq 2$, of different sampling units by which the modulated analog sensor signal ($U_{sen}$) is in each case sampled at a sampling frequency ($f_s$) which is defined by the following relationship:

$$f_s = \frac{2M}{2M \pm 1} \cdot f_e,$$

where M is again the natural number >1 and $f_e$ is the excitation frequency of the periodic electrical excitation signal ($U_e$),
wherein there is a time offset ($\Delta T$) between the first occurrence of the first sample value of a sampling unit and the first occurrence of the first sample value of the directly following sampling unit, said time offset ($\Delta T$) satisfying the following requirement:

$$0 < \Delta T < T_e,$$

where $T_e$ is the period of the periodic electrical excitation signal ($U_e$).

4. An apparatus in accordance with any one of the preceding claims, **characterized in that** the calculation means for calculating the position (x) of the rotor on the basis of $\xi \cdot M$ sample values, where $\xi \geq 2$, of the means for an A/D conversion, which are provided for sampling the modulated analog sensor signal ($U_{sen}$) of the contactless sensor system (12), are designed in accordance with the following relationship:

$$x = \sum_{n=0}^{M-1} k_1[n] \cdot U_{\text{sen\_1}}[n] + \sum_{n=0}^{M-1} k_2[n] \cdot U_{\text{sen\_2}}[n] + \cdots + \sum_{n=0}^{M-1} k_\xi[n] \cdot U_{\text{sen\_}\xi}[n],$$

where M is again the natural number >1 and $k_1[n]$ to $k_\xi[n]$ are the coefficients of the calculation.

5. An apparatus in accordance with any one of the preceding claims,

   **characterized in that**, to detect an object movement along a respective measurement axis ($S_i$), the contactless sensor system (12) comprises a respective sensor coil unit having at least two sensor coils (16, 18) which can each be acted on by the periodic electrical excitation signal ($U_{\text{ext}}$) via the control and/or evaluation device (14) and which are arranged relative to one another and relative to the magnetic bearing (183) of the magnetically supported rotor such that, on a respective object movement along the respective measurement axis ($S_i$), either an inductance change in opposite senses occurs in the two sensor coils (16, 18) or the inductance changes in only one of the two sensor coils (16, 18) and remains at least substantially unchanged in the other sensor coil, wherein provision is in particular made
   that means (20) for forming an induced sensor voltage, which forms the modulated analog sensor signal ($U_{\text{sen}}$), from a differential current ($i_{\text{diff}}$) are provided, said differential current ($i_{\text{diff}}$) resulting from the currents ($i_1$, $i_2$) induced in the two sensor coils (16, 18) associated with a respective measurement axis ($S_i$), wherein the induced sensor voltage forming the modulated analog sensor signal ($U_{\text{sen}}$) can be sampled via the control and/or evaluation device (14) to detect a respective object movement along the respective sensor axis ($S_i$) at a sampling frequency ($f_s$) which is asynchronous with respect to the excitation frequency ($f_s$).

6. An apparatus in accordance with any one of the preceding claims, **characterized in that** the periodic electrical excitation signal ($U_e$) is formed by an at least substantially sinusoidal or cosinusoidal signal or has a shape differing from a sinusoidal or cosinusoidal shape.

7. An apparatus in accordance with claim 5 or claim 6,

   **characterized in that** the means for forming the induced sensor voltage forming the modulated analog sensor signal ($U_{\text{sen}}$) comprise a transformer (20) connected to the two sensor coils (16, 18) at the input side and having an output coil (24) at the output side,
   wherein provision is in particular made
   that a switch (28), in particular an analog switch (28), controllable via the control and/or evaluation device (14) is provided between the transformer and the two sensor coils (16, 18) associated with a respective measurement axis (Si) and the transformer (20) is switchable via said switch (28) repeatedly by the two sensor coils (16, 18) to a resistor arrangement (34), in particular comprising two fixed resistors (30, 32) and preferably having a constant impedance, during the detection operation for determining the respective actual amplification factor of the transformer (20).

8. An apparatus in accordance with claim 7,
   **characterized in that** the respective actual variation of the amplification factor of the transformer (20) can be determined via the control and/or evaluation device (14) based on a comparison of the determined respective actual amplification factor of the transformer (20) with a reference value which is in particular stored.

9. An apparatus in accordance with claim 8,
   **characterized in that** the induced sensor voltage ($U_{\text{sen}}$), which is generated as an output voltage during the detection operation and which forms the modulated analog sensor signal ($U_{\text{sen}}$), can be corrected via the control and/or evaluation device (14) based on the determined respective actual variation of the amplification factor of the transformer (20) in order to compensate influences on the induced sensor voltage, which forms the modulated analog sensor signal ($U_{\text{sen}}$), which are in particular caused by the temperature of the transformer (20).

10. An apparatus in accordance with any one of the preceding claims, **characterized in that** the contactless sensor system (12), in particular a respective sensor coil unit (16, 18), and/or the control and/or evaluation device (14) is/are provided on a circuit board (26).

11. An apparatus in accordance with any one of the preceding claims, **characterized in that** the contactless sensor system (12) comprises a corresponding plurality of sensor coil units, each having at least two sensor coils (16, 18), for a contactless detection of the position of the at least partly magnetically supported rotor (22) along a plurality of measurement axes ($S_i$).

12. An apparatus in accordance with any one of the claims 5 to 11, **characterized in that** a respective sensor coil unit for forming a differential coil arrangement, in which an inductance change in opposite senses occurs in the two sensor coils (16, 18) on a respective radial object movement, comprises two sensor coils (16, 18) arranged at mutually oppositely disposed sides of the adjacent magnetic bearing (183) of the magnetically supported rotor, and/or **in that** a respective sensor coil unit for forming an absolute coil arrangement, in which the inductance changes in only one of the two sensor coils (16, 18) on a respective axial object movement and remains unchanged in the other sensor coil serving as a reference, is designed with sensor coils (16, 18) of different diameters which are concentric relative to one another.

13. A vacuum pump, in particular a turbomolecular pump, comprising a stator and a rotor rotatably supported about the rotor axis (18) relative to the stator; and an apparatus (10) in accordance with least one of the preceding claims for detecting the position of the rotor.

14. A method of detecting the position (x) of an at least partly magnetically supported object in the form of an at least partly magnetically supported rotor (22), in particular an at least partly magnetically supported rotor of a vacuum pump, preferably a turbomolecular pump,
in which

- a periodic electrical excitation signal ($U_e$) is generated by means of a digital control and/or evaluation device (14), which works at a control frequency ($f_c$), at an excitation frequency ($f_e$) which is defined by the following relationship:

$$f_e = M \cdot f_c,$$

where M is a natural number >1,
- the excitation signal ($U_e$) is modulated by means of a contactless sensor system (12) in dependence on the position (x) of the rotor and a correspondingly modulated analog sensor signal ($U_{sen}$) is generated as an output signal,
- an A/D conversion of the contactless analog sensor signal ($U_{sen}$) into a digital sensor signal is performed by means of the control and/or evaluation device (14), the modulated analog sensor signal ($U_{sen}$) being sampled by said A/D conversion at a sampling frequency ($f_s$) which is asynchronous with respect to the excitation frequency ($f_e$) and to which the following relationship applies:
$f_s \neq f_e/ N$, where N is a further natural number which is independent of M,
- the position (x) of the rotor is calculated on the basis of the digital sensor signal generated by the A/D conversion by means of the control and/or evaluation device (14) at the control frequency ($f_c$), and
- the modulated analog sensor signal ($U_{sen}$) is sampled by the A/D conversion at an asynchronous sampling frequency $f_s$ which is defined by the following relationship:

$$f_s = \frac{2M}{2M \pm 1} \cdot f_e,$$

where M is again the natural number >1 and $f_e$ is the excitation frequency of the periodic electrical excitation signal.

## Revendications

1. Dispositif (10) pour détecter la position (x) d'un objet monté au moins partiellement sur palier magnétique, sous forme de rotor (22) monté au moins partiellement sur palier magnétique, en particulier sous forme de rotor monté au moins partiellement sur palier magnétique d'une pompe à vide, de préférence d'une pompe turbomoléculaire, comportant un système de capteurs sans contact (12) et une unité de commande et/ou d'évaluation numérique (14) associée à celui-ci et fonctionnant à une fréquence de commande ($f_c$),
dans lequel

- l'unité de commande et/ou d'évaluation (14) comprend des moyens pour générer un signal d'excitation électrique périodique ($U_e$) avec une fréquence d'excitation ($f_e$) définie par la relation suivante :

$$f_e = M \cdot f_{c,}$$

où M est un nombre naturel > 1
- le système de capteurs sans contact (12) est conçu pour moduler le signal d'excitation ($U_e$) en fonction de la position (x) du rotor et fournit, en tant que signal de sortie, un signal de capteur analogique ($U_{sen}$) modulé de manière correspondante,
- l'unité de commande et/ou d'évaluation (14) comprend des moyens de conversion A/N du signal de capteur analogique modulé ($U_{sen}$) en un signal de capteur numérique, par lesquels le signal de capteur analogique modulé ($U_{sen}$) est échantillonné à une fréquence d'échantillonnage $f_s$ qui est asynchrone par rapport à la fréquence d'excitation ($f_e$) et pour laquelle s'applique la relation suivante :

$$f_s \neq f_e / N$$

où N est un autre nombre naturel indépendant de M, et
- l'unité de commande et/ou d'évaluation (14) comprend des moyens de calcul fonctionnant à la fréquence de commande ($f_c$) pour calculer la position (x) du rotor sur la base du signal de capteur numérique fourni par les moyens de conversion A/N, et
- le signal de capteur analogique modulé ($U_{sen}$) est échantillonné par les moyens de conversion A/N à une fréquence d'échantillonnage asynchrone $f_s$ définie par la relation suivante :

$$f_s = \frac{2M}{2M \pm 1} \cdot f_e$$

où M est de nouveau le nombre naturel > 1, et $f_e$ est la fréquence d'excitation du signal d'excitation électrique périodique.

2. Dispositif selon la revendication 1,
**caractérisé en ce que** les moyens de calcul pour calculer la position (x) du rotor sur la base des M valeurs échantillonnées du signal de capteur analogique modulé ($U_{sen}$) du système de capteurs sans contact (12) sont mis en œuvre selon la relation suivante :

$$x = \sum_{n=0}^{M-1} k[n] \cdot U_{sen}[n]$$

où M est de nouveau le nombre naturel > 1, et k[n] sont les coefficients pour le calcul.

3. Dispositif selon l'une des revendications précédentes,
**caractérisé en ce que** les moyens de conversion A/N comprennent un nombre $\xi$, où $\xi \geq 2$, de différentes unités d'échantillonnage par lesquelles le signal de capteur analogique modulé ($U_{sen}$) est respectivement échantillonné à une fréquence d'échantillonnage ($f_s$) définie par la relation suivante :

$$f_s = \frac{2M}{2M \pm 1} \cdot f_e$$

où M est de nouveau le nombre naturel > 1, et $f_e$ est la fréquence d'excitation du signal d'excitation électrique périodique ($U_e$),
et, entre la première occurrence de la première valeur échantillonnée d'une unité d'échantillonnage et la première occurrence de la première valeur échantillonnée de l'unité d'échantillonnage immédiatement suivante, il existe un décalage temporel ($\Delta T$) qui satisfait à la condition suivante :

$$0 < \Delta T < T_e$$

où $T_e$ est la période du signal d'excitation électrique périodique ($U_e$).

4. Dispositif selon l'une des revendications précédentes,
**caractérisé en ce que** les moyens de calcul pour calculer la position (x) du rotor sur la base de $\xi$ . M valeurs échantillonnées, où $\xi \geq 2$, des moyens de conversion A/N prévus pour échantillonner le signal de capteur analogique modulé ($U_{sen}$) du système de capteurs sans contact (12) sont mis en œuvre selon la relation suivante :

$$x= \sum_{n=0}^{M-1} k_1\,[n]\cdot U_{sen\_1}[n] + \sum_{n=0}^{M-1} k_2\,[n]\cdot U_{sen\_2}[n] + \ldots + \sum_{n=0}^{M-1} k_\xi\,[n]\cdot U_{sen\_\xi}[n]$$

où M est de nouveau le nombre naturel > 1, et $k_1[n]$ à $K_\xi[n]$ sont les coefficients du calcul.

5. Dispositif selon l'une des revendications précédentes,
**caractérisé en ce que** le système de capteurs sans contact (12) pour la détection d'un mouvement de l'objet le long d'un axe de mesure respectif ($S_i$) comprend une unité respective de bobines de capteur ayant au moins deux bobines de capteur (16, 18) auxquelles le signal d'excitation électrique périodique ($U_e$) peut être appliqué respectivement par le biais de l'unité de commande et/ou d'évaluation (14) et qui sont disposées l'une par rapport à l'autre et par rapport au palier magnétique (183) du rotor monté sur palier magnétique de telle manière que, lors d'un mouvement respectif de l'objet le long de l'axe de mesure respectif ($S_i$), soit une modification de l'inductance dans des sens opposés se produit dans les deux bobines de capteur (16, 18), soit l'inductance ne change que dans l'une des deux bobines de capteur (16, 18) et reste au moins sensiblement inchangée dans l'autre bobine de capteur, et il est en particulier prévu des moyens (20) pour former une tension de capteur induite, formant le signal de capteur analogique modulé ($U_{sen}$), à partir d'un courant différentiel ($i_{diff}$) qui résulte des courants ($i_1$, $i_2$) induits dans les deux bobines de capteur (16, 18) associées à un axe de mesure respectif ($S_i$), et la tension de capteur induite formant le signal de capteur analogique modulé ($U_{sen}$) peut être échantillonnée par l'unité de commande et/ou d'évaluation (14) pour détecter un mouvement respectif de l'objet le long de l'axe de capteur correspondant ($S_i$) avec une fréquence d'échantillonnage ($f_s$) qui est asynchrone par rapport à la fréquence d'excitation ($f_e$).

6. Dispositif selon l'une des revendications précédentes,
**caractérisé en ce que** le signal d'excitation électrique périodique ($U_e$) est formé par un signal au moins sensiblement sinusoïdal ou cosinusoïdal ou présente une forme s'écartant d'une forme sinusoïdale ou cosinusoïdale.

7. Dispositif selon la revendication 5 ou 6,

**caractérisé en ce que** les moyens pour former la tension de capteur induite formant le signal de capteur analogique modulé ($U_{sen}$) comprennent un transformateur (20) connecté du côté entrée aux deux bobines de capteur (16, 18) et présentant du côté sortie une bobine de sortie (24),
et il est en particulier prévu, entre le transformateur et les deux bobines de capteur (16, 18) associées à un axe de mesure respectif ($S_i$), un commutateur (28), en particulier analogique, qui peut être piloté par l'intermédiaire de l'unité de commande et/ou d'évaluation (14) et par lequel le transformateur (20) peut être commuté, de manière répétée, des deux bobines de capteur (16, 18) à un ensemble de résistances (34), comprenant en particulier deux résistances fixes (30, 32), de préférence à impédance constante, pendant le processus de détection afin de déterminer le facteur d'amplification actuel respectif du transformateur (20).

8. Dispositif selon la revendication 7,
**caractérisé en ce que**, à l'aide de l'unité de commande et/ou d'évaluation (14), la variation actuelle respective du facteur d'amplification du transformateur (20) peut être constatée sur la base d'une comparaison du facteur d'amplification actuel respectif déterminé du transformateur (20) avec une valeur de référence en particulier mémorisée.

9. Dispositif selon la revendication 8,
**caractérisé en ce que**, à l'aide de l'unité de commande et/ou d'évaluation (14), la tension de capteur induite, générée en tant que tension de sortie pendant le processus de détection et formant le signal de capteur analogique modulé ($U_{sen}$), peut être corrigée sur la base de la variation actuelle respective constatée du facteur d'amplification du transformateur (20), afin de compenser des influences sur la tension de capteur induite formant le signal de capteur analogique modulé ($U_{sen}$), en particulier des influences dues à la température du transformateur (20).

10. Dispositif selon l'une des revendications précédentes,
**caractérisé en ce que** le système de capteurs sans contact (12), en particulier une unité de bobine de capteur respective (16, 18), et/ou l'unité de commande et/ou d'évaluation (14) sont prévu(e)s sur une carte de circuit imprimé (26).

11. Dispositif selon l'une des revendications précédentes,
**caractérisé en ce que** le système de capteurs sans contact (12) pour la détection sans contact de la position du rotor (22) monté au moins partiellement sur palier magnétique le long de plusieurs axes de mesure ($S_i$) comprend une pluralité correspondante d'unités de bobines de capteur ayant chacune au moins deux bobines de capteur (16, 18).

12. Dispositif selon l'une des revendications 5 à 11,
**caractérisé en ce qu'**une unité de bobines de capteur respective pour former un ensemble de bobines différentiel, dans lequel une modification de l'inductance dans des sens opposés se produit dans les deux bobines de capteur (16, 18) lors d'un mouvement radial respectif de l'objet, comprend deux bobines de capteur (16, 18) disposées sur des côtés opposés du palier magnétique adjacent (183) du rotor monté sur palier magnétique, et/ou **en ce qu'**une unité de bobines de capteur respective pour former un ensemble de bobines absolu, dans lequel l'inductance ne change que dans l'une des deux bobines de capteur (16, 18) lors d'un mouvement axial respectif de l'objet et reste inchangée dans l'autre bobine de capteur servant de référence, est réalisée avec des bobines de capteur (16, 18) de diamètres différents qui sont concentriques l'une par rapport à l'autre.

13. Pompe à vide, en particulier pompe turbomoléculaire, comportant un stator et un rotor monté mobile en rotation autour de l'axe de rotor (18) par rapport au stator, et comportant un dispositif (10) selon l'une au moins des revendications précédentes pour détecter la position du rotor.

14. Procédé pour détecter la position (x) d'un objet monté au moins partiellement sur palier magnétique, sous forme de rotor (22) monté au moins partiellement sur palier magnétique, en particulier sous forme de rotor monté au moins partiellement sur palier magnétique d'une pompe à vide, de préférence d'une pompe turbomoléculaire, dans lequel

- au moyen d'une unité de commande et/ou d'évaluation numérique (14) fonctionnant à une fréquence de commande ($f_c$), on génère un signal d'excitation électrique périodique ($U_e$) avec une fréquence d'excitation ($f_e$) définie par la relation suivante :

$$f_e = M \cdot f_c$$

où M est un nombre naturel > 1,
- au moyen d'un système de capteurs sans contact (12), le signal d'excitation ($U_e$) est modulé en fonction de la position (x) du rotor et un signal de capteur analogique ($U_{sen}$) modulé en correspondance est généré en tant que signal de sortie,
- une conversion A/N du signal de capteur analogique sans contact ($U_{sen}$) en un signal de capteur numérique est effectuée au moyen de l'unité de commande et/ou d'évaluation (14), par laquelle le signal de capteur analogique modulé ($U_{sen}$) est échantillonné avec une fréquence d'échantillonnage ($f_s$) qui est asynchrone par rapport à la fréquence d'excitation ($f_e$) et pour laquelle s'applique la relation suivante :

$$f_s \neq f_e / N$$

où N est un autre nombre naturel indépendant de M, et
- au moyen de l'unité de commande et/ou d'évaluation (14), avec la fréquence de commande ($f_c$), la position (x) du rotor est calculée sur la base du signal de capteur numérique généré par la conversion A/N, et
- le signal de capteur analogique modulé ($U_{sen}$) est échantillonné par la conversion A/N à une fréquence d'échantillonnage asynchrone $f_s$ définie par la relation suivante :

$$f_s = \frac{2M}{2M \pm 1} \cdot f_e$$

où M est de nouveau le nombre naturel > 1, et $f_e$ est la fréquence d'excitation du signal d'excitation électrique périodique.

Fig. 1

Fig. 2

Fig.3

A-A

Fig. 4

Fig. 5

## Fig.6

## Fig. 7

Fig. 8

$$f_c = \frac{1}{M} f_e, \qquad M \in \mathbb{N}$$

$$\left. \begin{array}{l} f_{s1} = \dfrac{2M}{2M-1} f_e \\[2mm] f_{s2} = \dfrac{2M}{2M+1} f_e \end{array} \right\} \Rightarrow f_s = \dfrac{2M}{2M \pm 1} f_e$$

Fig. 9

EP 3 483 451 B1

Position — Abtastwerte

$$x \sim \sum_{n=0}^{M-1} k[n] \cdot U_{sen}[n]$$

$U_{sen}$

Koeffizienten

0, 1, 2, ... M-1

Abtastpunkte $f\_e$

Fig. 10

Fig. 11

Fig. 12

Fig. 13

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140219841 A1